(19) **Europäisches Patentamt / European Patent Office / Office européen des brevets**

(11) **EP 1 954 377 B1**

(12) **FASCICULE DE BREVET EUROPEEN**

(45) Date de publication et mention
de la délivrance du brevet:
**05.05.2010 Bulletin 2010/18**

(21) Numéro de dépôt: **06709529.9**

(22) Date de dépôt: **23.02.2006**

(51) Int Cl.:
**B01D 53/047** (2006.01)

(86) Numéro de dépôt international:
**PCT/FR2006/050159**

(87) Numéro de publication internationale:
**WO 2006/100398 (28.09.2006 Gazette 2006/39)**

(54) **PROCEDE DE REGLAGE D'UNE INSTALLATION DE TRAITEMENT PAR ADSORPTION D'UN GAZ**

VERFAHREN ZUR REGELUNG EINER ANLAGE FÜR DIE ABSORPTIONSBEHANDLUNG EINES GASES

METHOD OF ADJUSTING AN INSTALLATION FOR THE ADSORPTION TRATMENT OF A GAS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **25.03.2005 FR 0550788**

(43) Date de publication de la demande:
**13.08.2008 Bulletin 2008/33**

(73) Titulaire: **L'AIR LIQUIDE, Société Anonyme pour l'Etude
et l'Exploitation des Procédés Georges Claude
75321 Paris Cedex 07 (FR)**

(72) Inventeurs:
• **ALLIDIERES, Laurent
F-38410 Uriage Les Bains (FR)**

• **AUBEL, Jean-christophe
F-75014 Paris (FR)**
• **DROUART, Caroline
F-92320 Chatillon (FR)**
• **ENGLER, Yves
F-78400 Chatou (FR)**

(74) Mandataire: **Conan, Philippe Claude
L'Air Liquide SA,
75 Quai d'Orsay
75321 Paris Cedex 07 (FR)**

(56) Documents cités:
EP-A- 0 375 220    EP-A- 0 925 821
EP-A- 1 114 666    EP-A- 1 336 910
WO-A-98/56488    US-A- 4 299 595
US-A- 4 693 730    US-A- 4 725 293
US-A- 5 407 465    US-A1- 2004 055 462

**Description**

La présente invention est relative aux procédés de réglage d'une installation de traitement par adsorption d'un gaz soumis à un écoulement à travers ladite installation et aux procédés de traitement de gaz par adsorption.

Le document EP-A-1 336 910 décrit un exemple d'une telle installation de traitement, classiquement désignée par l'acronyme anglais PSA (Pressure Swing Adsorption). Une telle installation comprend différents organes recevant un gaz, tels qu'au moins deux bouteilles comprenant un adsorbant (dix bouteilles dans l'exemple du document cité), chaque bouteille comprenant une ou plusieurs couches d'adsorbants, tel que par exemple, et de façon non limitative, un tamis moléculaire, du charbon actif ou de l'alumine, une conduite d'alimentation amenant un mélange gazeux à l'installation, une conduite de production délivrant depuis l'installation un gaz purifié, une conduite de collecte de gaz résiduaire délivrant depuis l'installation un gaz contenant des impuretés du gaz entrant. En outre, les organes sus-nommés sont reliés entre eux par des conduites portant chacune au moins une vanne permettant le passage ou non de gaz entre deux organes.

Une telle installation apporte toute satisfaction. Néanmoins, afin de s'assurer de la durée de vie de l'installation et/ou de la qualité du gaz produit, et/ou de la qualité de l'écoulement de gaz produit, un soin tout particulier est à apporter à l'écoulement du gaz dans l'installation.

A cet effet, selon l'invention, on prévoit un procédé de réglage d'une unité de commande d'une installation de traitement de gaz par adsorption,

ladite installation étant destinée à mettre en oeuvre un procédé de production de gaz au cours duquel un gaz d'alimentation chargé en impuretés est fourni à l'installation, pour produire au moins un gaz provenant de la purification du gaz d'alimentation, ledit procédé de production comprenant une pluralité d'étapes, au cours desquelles un gaz est soumis à un écoulement dans ladite installation, ledit écoulement présentant un certain nombre de paramètres caractéristiques d'écoulement,

ladite installation comprenant une pluralité d'organes :

- une conduite d'alimentation en un gaz d'alimentation à purifier par adsorption,
- une conduite de production d'un gaz purifié,
- une conduite d'évacuation d'un gaz résiduaire, contenant des impuretés du gaz d'alimentation,
- une pluralité de bouteilles contenant au moins un matériau adsorbant,

ladite installation comprenant en outre :

- une pluralité de conduites de raccordement, chacune reliant entre eux deux desdits organes,
- une vanne sur chacune desdites conduites de raccordement, chaque vanne étant adaptée pour être sélectivement fermée pour interdire un flot de gaz dans la conduite de raccordement, ou ouverte selon un paramètre d'ouverture variable, pour autoriser un flot de gaz dans la conduite de raccordement,

un système étant défini par deux organes reliés entre eux par une conduite de raccordement munie d'une vanne, ladite installation présentant un certain nombre de paramètres caractéristiques d'installation, et

- ladite unité de commande, adaptée pour commander l'ouverture de la vanne selon un paramètre d'ouverture pour chaque système, pour chaque étape,
- pour chaque système, un dispositif de détection adapté pour mesurer une valeur mesurée d'un paramètre physique de l'écoulement de gaz pour le système,

ladite unité de commande étant adaptée pour calculer, pour chaque système, un paramètre prévisionnel d'ouverture de la vanne, une valeur de consigne pour ledit paramètre physique de l'écoulement, une erreur entre une fonction de ladite valeur de consigne et la fonction de ladite valeur mesurée,

ladite unité de commande étant adaptée pour commander l'ouverture de la vanne selon ledit paramètre d'ouverture pour chaque système, pour chaque étape, sur la base au moins dudit paramètre prévisionnel d'ouverture de la vanne, et d'au moins un paramètre correcteur appliqué à ladite erreur,

ledit procédé de réglage comprenant une étape (a) au cours de laquelle on règle ledit paramètre correcteur en fonction desdits paramètres caractéristiques d'installation et d'écoulement.

Grâce à ces dispositions, on peut régler une fois pour toutes l'unité de commande à partir de paramètres caractéristiques liés à l'installation et à l'écoulement, ce qui permet à l'installation d'être facilement configurée au démarrage, et d'être automatiquement reconfigurée lors d'un changement de gaz d'alimentation, par exemple.

Dans des modes de réalisation préférés de l'invention, on peut avoir recours en outre à l'une et/ou à l'autre des dispositions suivantes :

- le paramètre correcteur est un paramètre correcteur proportionnel appliqué à une erreur entre la fonction de la valeur de consigne actuelle et la fonction de la valeur mesurée actuelle ;
- lors de la mise en oeuvre du procédé de production de gaz, l'unité de commande est adaptée pour commander l'ouverture de la vanne selon en outre un paramètre d'ouverture antérieur pour la vanne, une valeur antérieure du paramètre prévisionnel, ledit paramètre correcteur proportionnel appliqué à une erreur entre la fonction d'une valeur de consigne antérieure pour le paramètre physique de l'écoulement et la fonction d'une valeur mesurée antérieure pour le paramètre physique de l'écoulement, et d'un deuxième paramètre correcteur intégral appliqué à ladite erreur entre la fonction d'une valeur de consigne actuelle pour le paramètre physique de l'écoulement et la fonction d'une valeur mesurée actuelle pour le paramètre physique de l'écoulement,

au cours de l'étape (a) du procédé de réglage, on règle ledit deuxième paramètre correcteur intégral en fonction desdits paramètres caractéristiques d'installation et d'écoulement;

- lors de la mise en oeuvre du procédé de production de gaz, l'unité de commande est adaptée pour commander l'ouverture de la vanne selon en outre un paramètre d'ouverture antérieur pour la vanne, et une valeur antérieure du paramètre prévisionnel, et dans lequel le paramètre correcteur est un paramètre correcteur intégral appliqué à l'erreur entre la fonction de ladite valeur de consigne antérieure et la fonction de ladite valeur mesurée antérieure,

procédé de réglage pendant lequel, au cours de l'étape (a), on règle ledit paramètre correcteur intégral en fonction de paramètres de l'installation et de l'écoulement ;

- lors de la mise en oeuvre du procédé de production de gaz, l'unité de commande est adaptée pour commander l'ouverture de la vanne selon en outre une valeur maximale autorisée pour ledit paramètre d'ouverture.

Selon un autre aspect, l'invention concerne un procédé de production de gaz par adsorption au moyen d'une installation comprenant une unité de commande réglée par un tel procédé de réglage, ledit procédé de production de gaz comprenant une pluralité d'étapes distinctes s'étendant entre un début de phase et une fin de phase, au cours de chacune desquelles, pour au moins un système comprenant un premier et un deuxième organes, une conduite de raccordement reliant entre eux lesdits premier et deuxième organes, une vanne sur ladite conduite de raccordement, un gaz s'écoulant entre le premier et le deuxième organe pendant ladite étape, on met en oeuvre de manière répétée les étapes suivantes :

(b) on calcule la valeur de consigne pour le paramètre physique de l'écoulement,
(c) on mesure, par le dispositif de détection, ladite valeur mesurée dudit paramètre physique de l'écoulement,
(d) on calcule le paramètre prévisionnel d'ouverture de la vanne en fonction du temps, des paramètres caractéristiques d'installation et d'écoulement, et de ladite valeur de consigne pour le paramètre physique de l'écoulement, et
(e) on calcule la valeur dudit paramètre d'ouverture en fonction du paramètre correcteur réglé à l'étape (a), appliqué à l'erreur entre la fonction de ladite valeur mesurée et la fonction de ladite valeur de consigne pour ledit paramètre physique de l'écoulement et du paramètre prévisionnel d'ouverture.

Dans dès modes de réalisation préférés de l'invention, on peut éventuellement avoir recours en outre à l'une et/ou à l'autre des dispositions suivantes :

- on mesure un point de fonctionnement du système en début d'étape, et pendant l'étape (e), ladite erreur est calculée en appliquant à ladite valeur mesurée et à ladite valeur de consigne une fonction non-linéaire de normalisation au point de fonctionnement;
- on met en outre en oeuvre de manière répétée les étapes suivantes :

(f) on calcule une valeur maximale autorisée pour le paramètre d'ouverture, en fonction du temps, des paramètres caractéristiques de l'installation et de l'écoulement, et de ladite valeur mesurée pour le paramètre physique de l'écoulement,
(g) on compare ladite valeur maximale autorisée à la valeur calculée à l'étape (e) et, si ladite valeur maximale autorisée est inférieure à ladite valeur calculée, on utilise ladite valeur maximale autorisée à la place de ladite valeur calculée ;

- le premier organe est une première bouteille contenant un adsorbant, le deuxième organe est une deuxième bouteille contenant un adsorbant, ledit procédé de production comprenant une étape d'équilibrage au cours de laquelle un gaz s'écoule dans la conduite de raccordement depuis la première vers la deuxième bouteille jusqu'à ce qu'une valeur de différence de pression entre la pression dans la deuxième bouteille et la pression dans la première bouteille atteigne une valeur donnée, et au cours de laquelle on met en oeuvre au moins les étapes (b) à (e) avec comme paramètre physique de l'écoulement une différence de pression entre la première et la deuxième bouteille ;

- le premier organe est une première bouteille comprenant un adsorbant, le deuxième organe est une deuxième bouteille contenant un adsorbant, ledit procédé de production comprenant une étape d'élution, au cours de laquelle un gaz s'écoule dans la conduite de raccordement de la première à la deuxième bouteille pour rincer ladite deuxième bouteille, et au cours de laquelle on met en oeuvre au moins les étapes (b) à (e) avec comme paramètre physique de l'écoulement une différence de pression entre la première et la deuxième bouteille ;

- ladite installation comprend une conduite de production délivrant un gaz produit par l'installation et une conduite d'alimentation en gaz alimentant ladite installation, le deuxième organe est une deuxième bouteille contenant un adsorbant, ledit procédé de production comprenant une étape de repressurisation finale au cours de laquelle un gaz s'écoule dans une conduite de raccordement vers la deuxième bouteille pour augmenter une valeur de pression dans la deuxième bouteille, et au cours de laquelle on met en oeuvre au moins les étapes (b) à (e) avec comme paramètre physique de l'écoulement une différence de pression entre une première bouteille reliée à l'une des conduites de production et d'alimentation et la deuxième bouteille ;

- le premier organe est une première bouteille contenant un adsorbant, le deuxième organe est une conduite d'évacuation de gaz résiduaire, ledit procédé de production comprenant une étape de dépressurisation au cours de laquelle un gaz s'écoule dans la conduite de raccordement entre la première bouteille et la conduite d'évacuation jusqu'à atteindre un niveau de pression basse pour la première bouteille, et au cours de laquelle on met en oeuvre au moins les étapes (b) à (e) avec comme paramètre physique de l'écoulement une différence de pression entre la première bouteille et la conduite d'évacuation de gaz résiduaire ;

- ladite installation comprend en outre une conduite d'alimentation en gaz alimentant ladite installation selon un débit d'alimentation,

une conduite de production de l'installation délivrant un gaz produit selon un débit de production,
et une bouteille d'équilibrage, un gaz s'écoulant de la bouteille d'équilibrage à une deuxième bouteille pendant une étape d'équilibrage jusqu'à ce qu'une valeur de différence de pression entre la pression dans la deuxième bouteille et la pression dans la bouteille d'équilibrage atteigne une valeur donnée,
le premier organe est une première bouteille reliée à une des conduites d'alimentation et de production,
le deuxième organe est ladite deuxième bouteille,
ledit procédé de production comprenant une étape de repressurisation continue au cours de laquelle un gaz s'écoule dans la conduite de raccordement entre ladite conduite et la deuxième bouteille jusqu'à obtenir une pression de fonctionnement dans la deuxième bouteille, et au cours de laquelle on met en oeuvre au moins les étapes (b) à (e) avec comme paramètre physique de l'écoulement une différence entre le débit de production et le débit d'alimentation ;

- au cours d'au moins une étape de procédé de production, on ne met en oeuvre au moins l'étape (e) qu'après un délai transitoire en début de l'étape de procédé de production, ledit délai transitoire étant d'une durée suffisante pour que le paramètre physique de l'écoulement prenne une valeur représentative.

Selon un autre aspect, l'invention se rapporte à un programme comprenant des moyens de code de programme adaptés pour mettre en oeuvre un tel procédé quand ledit programme est exécuté sur une machine programmable.

Selon encore un autre aspect, l'invention se rapporte à un gaz produit par un tel procédé.

D'autres caractéristiques et avantages de l'invention apparaîtront au cours de la description suivante d'une de ses formes de réalisation, donnée à titre d'exemple non limitatif, en regard des dessins joints.

Sur les dessins :

- la figure 1 est une vue schématique d'une installation de traitement d'un gaz par adsorption;
- la figure 2 est un diagramme du cycle de fonctionnement des adsorbeurs de l'installation de la figure 1 sur laquelle différents temps de phase de fonctionnement a, b, ... , j sont représentés ;
- les figures 3I à 3X sont des diagrammes respectivement associés aux adsorbeurs de l'installation de la figure 1 et illustrant un seul et même temps de phase du cycle de la figure 2 ;
- la figure 4 représente un schéma de principe d'un procédé de régulation de vanne ;
- les figures 5a et 5b sont des graphiques temporels représentant respectivement une consigne d'écart de pression et le CV au cours du temps pour une étape d'équilibrage ;
- la figure 6 représente un système soumis à une étape d'élution ;
- la figure 7 représente un système soumis à une étape de dépressurisation ;
- la figure 8 représente un système soumis à une étape d'équilibrage ;
- la figure 9 représente un système soumis à une étape de repressurisation finale,

- la figure 10 représente un système soumis à une étape combinée d'équilibrage et de repressurisation continue,
- la figure 11 est un diagramme de cycle de fonctionnement similaire à la figure 2 pour une deuxième installation de traitement de gaz, et
- la figure 12 représente un système soumis à une étape combinée d'équilibrage et de repressurisation continue pour la deuxième installation.

Sur les différentes figures, les mêmes références désignent des éléments identiques ou similaires.

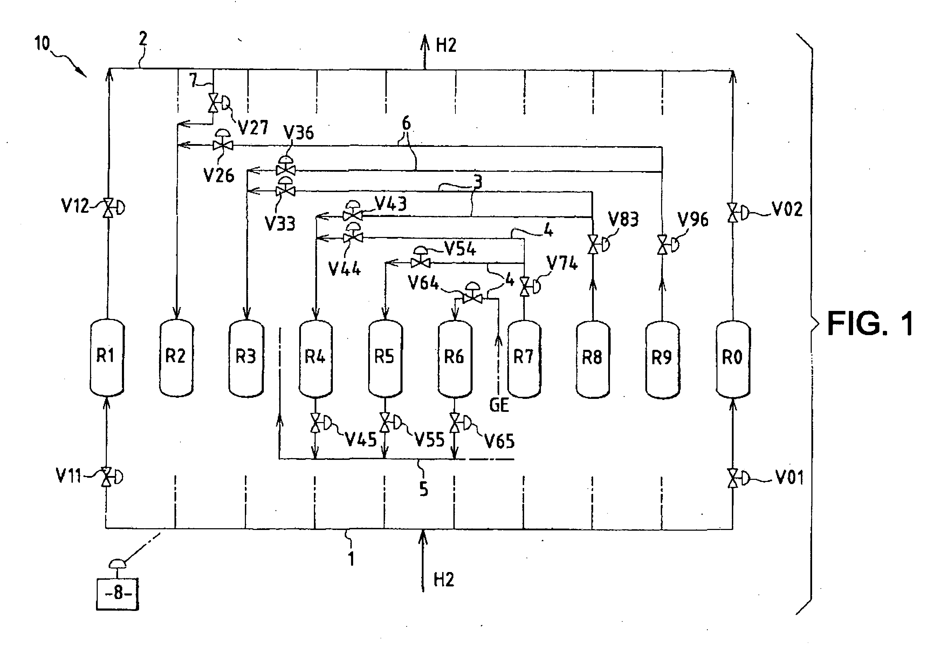

Sur la figure 1 est représentée une installation 10 de traitement d'un écoulement de gaz impur, tel que de l'hydrogène impur. L'installation est destinée à épurer cet écoulement d'hydrogène d'impuretés qu'il contient, telles que de l'eau, du monoxyde de carbone, de l'azote, du méthane, du dioxyde de carbone, des hydrocarbures, etc...

A cet effet, l'installation 10 comporte un certain nombre d'organes contenant du gaz, tels qu'une conduite 1 d'alimentation en hydrogène à épurer, une conduite 2 de production d'hydrogène épuré et dix adsorbeurs, référencés respectivement R1, R2, R3, ..., R9 et R0. Chaque adsorbeur comporte une bouteille contenant un ou plusieurs matériaux adsorbants à même de retenir tout ou partie des impuretés précitées lorsqu'il sont balayés par l'écoulement d'hydrogène à traiter. Ce ou ces matériaux sont régénérables, c'est-à-dire qu'ils sont capables de restituer des impuretés préalablement adsorbées. A cet effet, l'installation 10 comporte une conduite 5 d'évacuation du gaz résiduaire chargé d'impuretés désorbées provenant des adsorbeurs qui se régénèrent. L'installation 10 peut comporter également une ligne d'approvisionnement en un gaz d'élution GE, par exemple prélevé sur la conduite de production 2.

L'installation 10 comporte également d'une part des conduites de raccordement, dont la conduite 7, entre les conduites précitées 1, 2 et 5 et les adsorbeurs R1 à R0, et d'autre part, des conduites de raccordement 3, 4 et 6 reliant les adsorbeurs R1 à R0 entre eux, l'une des conduites de raccordement 4 étant raccordée à la ligne d'approvisionnement en gaz d'élution GE. La disposition précise des conduites de raccordement 3, 4, 6 et 7 apparaîtra plus clairement lors de la description du fonctionnement de l'installation 10. De plus, toutes ces conduites de raccordement sont munies de vannes de régulation de l'écoulement du gaz qui les traverse, dont la disposition apparaîtra également lors de la description du fonctionnement de l'installation.

L'installation 10 comporte en outre une unité 8 de commande des vannes des adsorbeurs de l'installation. Les détails de programmation et de fonctionnement de cette unité seront développés par la suite.

On dispose dans l'installation des dispositifs de détection tels un capteur de pression pour chaque bouteille, ou un capteur de débit pour chaque conduite.

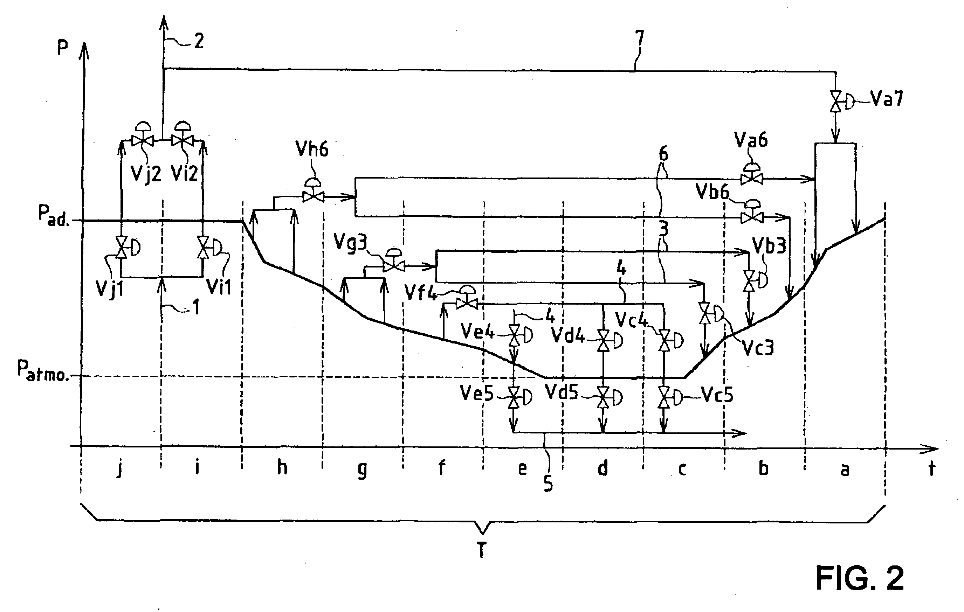

La figure 2 illustre un cycle de fonctionnement de l'installation 10. Sur cette figure, où les temps t sont portés en abscisses et les pressions absolues P en ordonnées, les traits orientés par des flèches indiquent les mouvements et destinations des courants gazeux, et, en outre, le sens de circulation dans respectivement les adsorbeurs R1 à R0 :

- lorsqu'une flèche est dans le sens des ordonnées croissantes (vers le haut du diagramme), le courant est dit à co-courant dans l'adsorbeur. Si la flèche dirigée vers le haut est située au-dessous du trait indiquant la pression dans l'adsorbeur, le courant pénètre dans l'adsorbeur par l'extrémité d'entrée de cet adsorbeur ; si la flèche dirigée vers le haut est située au-dessus du trait indiquant la pression, le courant sort de l'adsorbeur par l'extrémité de sortie de cet adsorbeur, les extrémités d'entrée et de sortie étant respectivement celles du gaz à traiter et du gaz soutiré en phase de production ;
- lorsqu'une flèche est dans le sens des ordonnées décroissantes (vers le bas du diagramme), le courant est dit à contre-courant dans l'adsorbeur. Si la flèche dirigée vers le bas est située au-dessous du trait indiquant la pression de l'adsorbeur, le courant sort de l'adsorbeur par l'extrémité d'entrée de l'adsorbeur ; si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase de production.

Chaque adsorbeur R1 à R0 suit le cycle de la figure 2, en étant décalé par rapport à l'adsorbeur le précédant d'une durée appelée « temps de phase » et égale à la durée T du cycle divisée par le nombre d'adsorbeurs en fonction (ici, par dix). Le cycle de la figure 2 comporte donc dix temps de phase et illustre la dualité "temps de phase/adsorbeurs", à savoir qu'à tout instant du fonctionnement de l'installation 10, chaque adsorbeur est dans un temps de phase différent, ce qui revient à dire que l'état du fonctionnement d'un adsorbeur est, à tout instant du fonctionnement de l'installation, déterminé par le temps de phase dans lequel est cet adsorbeur.

Le fonctionnement de l'installation 10 va être d'abord explicité en se contentant de décrire le fonctionnement des adsorbeurs R1 à R0 durant un seul temps de phase, étant entendu que le fonctionnement des adsorbeurs durant le reste du cycle se déduit par répétition en décalant l'ordre des adsorbeurs.

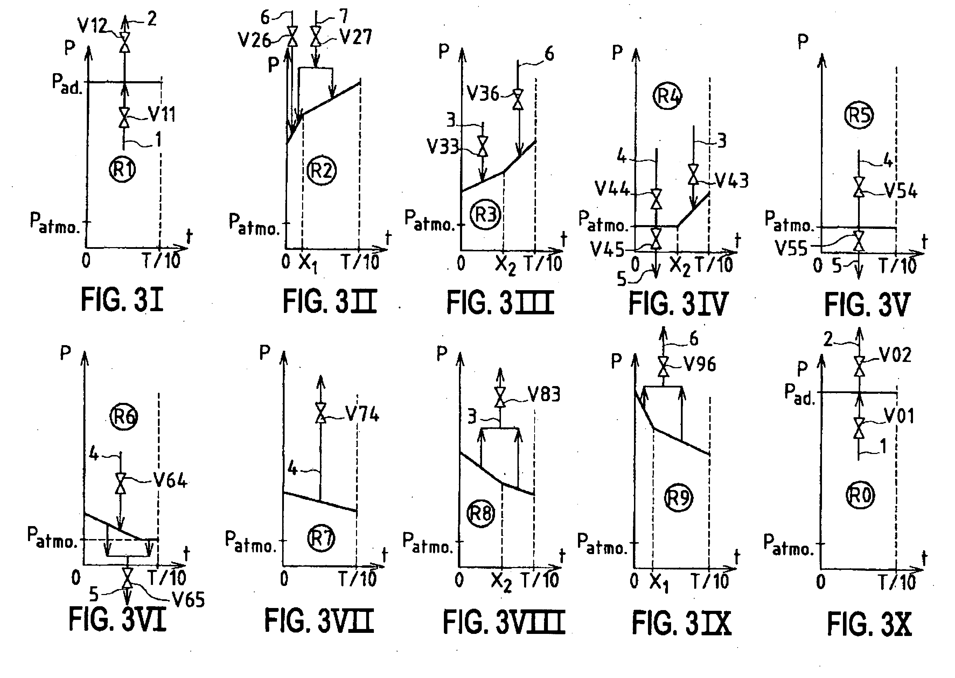

A cet effet, on considère par exemple le temps de phase durant lequel l'adsorbeur R1 est dit "maître", c'est-à-dire qu'il commence sa phase d'adsorption à une haute pression $P_{ad}$, supérieure à la pression atmosphérique $P_{atmo}$, tel qu'illustré sur la figure 3I. De façon concomitante, l'adsorbeur R2 suit le diagramme de la figure 3II, l'adsorbeur R3 suit le diagramme de la figure 3III, et ainsi de suite, jusqu'à l'adsorbeur R0 qui suit le diagramme de la figure 3X.

Pour faciliter la lecture, seules les vannes ouvertes durant au moins une partie de ce temps de phase, repéré par commodité entre les temps t=0 et t=T/10, sont représentées sur les figures 2 et 3I à 3X. Par commodité de numérotation, ces vannes seront désignées pour la description de cette installation par la lettre V suivie de deux caractères X, Y selon les conventions suivantes :

- X est le numéro de l'adsorbeur auquel est associée la vanne, et
- Y est le numéro d'un ensemble de vannes ayant la même fonction et associé à une des conduites de l'installation, le numéro 1 étant associé à une fonction "alimentation" de la conduite d'alimentation 1, le numéro 2 étant associé à une fonction "production" de la conduite de production 2, le numéro 3 étant associé à une fonction "équilibrage inférieur de pression" des conduites de raccordement 3, le numéro 4 étant associé à une fonction "élution" des conduites de raccordement 4, le numéro 5 étant associé à une fonction « évacuation du gaz résiduaire » de la conduite 5, le numéro 6 étant associé à une fonction "équilibrage supérieur de pression" des conduites de raccordement 6, et le numéro 7 étant associé à une fonction "repressurisation finale" de la conduite de raccordement 7.

Il est important de noter que l'agencement des vannes de mise en oeuvre du fonctionnement de l'installation 10 est volontairement simplifié, tant par commodité de description que de représentation ; des aménagements particuliers, comportant notamment moins de vannes moyennant des conduites transversales à toute l'installation par exemple, sont à la portée de l'homme de l'art, sans sortir du cadre de l'invention.

Préalablement au début du temps de phase représenté sur les figures 3I à 3X, c'est-à-dire avant l'instant t=0, les vannes V01, V02, V45 et V55 sont ouvertes durant au moins la fin du temps de phase précédant le temps de phase considéré représenté sur les figures 3I à 3X. Pendant ce dernier, les adsorbeurs R1 et R0 sont en adsorption, les autres adsorbeurs étant en régénération.

Plus précisément, à l'instant t=0 :

- en plus des vannes V01 et V02, les vannes V11 et V12 sont ouvertes pour assurer la production d'une partie du flux d'hydrogène épuré ;
- les vannes V26, V27 et V96 sont ouvertes pour permettre au moins une partie des flux issus respectivement des adsorbeurs R1, R9 et R0 de recomprimer l'adsorbeur R2 ;
- les vannes V33 et V83 sont ouvertes pour permettre, par le flux issu de l'adsorbeur R8, de recomprimer l'adsorbeur R3 ;
- les vannes V64 et V65 sont ouvertes pour permettre d'amener la pression de l'adsorbeur R6 à la pression basse du cycle et pour permettre l'élution du matériau adsorbant de la bouteille R6 ; et
- en plus de la vanne V55, les vannes V54 et V74 sont ouvertes pour permettre l'élution de l'adsorbeur R5 par le flux issu de l'adsorbeur R7.

De plus, de façon sensiblement concomitante à cet instant t=0, les vannes de mise en production de l'adsorbeur R9, qui était en adsorption durant le temps de phase précédant le temps de phase détaillé sur les figures 3I à 3X, sont fermées.

Puis, à partir de l'instant t = X1 où la pression dans l'adsorbeur R2 est sensiblement égale à la pression dans l'adsorbeur R9 :

- les vannes V26 et V96 sont fermées, la recompression ultérieure de l'adsorbeur R2 étant alors plus lente.

Puis, à partir de l'instant t = X2 où la pression dans l'adsorbeur R3 est sensiblement égale à la pression dans l'adsorbeur R8 :

- la vanne V33 est fermée et la vanne V43 est ouverte pour permettre de commencer la repressurisation de l'adsorbeur R4 ;
- les vannes V44 et V45 sont fermées, la totalité du flux issu de l'adsorbeur R7 alimentant alors l'adsorbeur R5 ; et
- les vannes V36 et V96 sont ouvertes pour permettre de recomprimer d'avantage l'adsorbeur R3 par le flux issu de R9.

Enfin, à l'instant t = T/10 où la pression dans l'adsorbeur R2 est sensiblement égale à la pression dans l'adsorbeur R1, les vannes V27, V96, V83, V74, V33, V43 et V36 sont fermées pour passer du temps de phase décrit jusqu'ici au temps de phase suivant.

Ainsi, bien que le graphique de la figure 2 semble représenter deux conduites de raccordement 6 et 3, il est plus exact de considérer qu'il s'agit en fait de la même conduite parcourue de manière successive par deux écoulements différents au cours d'un même temps de phase.

Le fonctionnement de l'installation 10 durant les autres temps de phase du cycle se déduit du fonctionnement ci-dessus, en considérant comme maître pendant le temps de phase suivant l'adsorbeur R2, puis l'adsorbeur R3, et ainsi de suite, jusqu'à l'adsorbeur R0.

L'ensemble des opérations de commande des vannes de l'installation, pour les dix temps de phase du cycle, forme ce qu'il est courant d'appeler un séquenceur de commande de l'unité 8, qui est à implémenter.

Pour cela, on introduit des paramètres : on associe à chaque temps de phase successif du cycle un paramètre d'identification de l'état de fonctionnement de l'adsorbeur qui est dans ce temps de phase.

Ainsi, sur le temps de phase représenté sur la figure 2, le paramètre d'état j est associé au temps de phase dans lequel l'adsorbeur commence son adsorption, le paramètre d'état i est associé au temps de phase qui suit et dans lequel l'adsorbeur termine son adsorption, le paramètre d'état h est associé au temps de phase qui suit et dans lequel l'adsorbeur commence sa dépressurisation, et. ainsi de suite pour les paramètres g, f, e, d, c, b et a. Ces paramètres d'état sont indiqués en abscisses du diagramme de la figure 2. Il est ainsi nécessaire d'introduire autant de paramètres qu'il y a de temps de phase.

De plus, ces paramètres sont dits "mobiles", dans le sens où ils peuvent correspondre à n'importe lequel des dix adsorbeurs, selon le moment considéré du cycle. Ainsi, si à un instant donné le paramètre j correspond à l'adsorbeur R1 (j=1), au bout d'une durée valant le cinquième du temps de cycle T, ce paramètre j correspondra à l'adsorbeur R3 (j=3).

Puis on définit une séquence paramétrée d'étapes de commande de l'installation 10 pendant uniquement un temps de phase donné, chaque adsorbeur n'étant pas repéré par son numéro, mais par le paramètre d'identification de l'état de fonctionnement de cet adsorbeur pendant la période de temps relative au temps de phase choisi. En d'autres termes, cela revient à décrire le fonctionnement de l'installation sur un temps de phase donné, de la même façon qu'il a été décrit en regard des figures 3I à 3X, mais en repérant chaque adsorbeur par un des paramètres variables a, ..., j, en fonction du temps de phase choisi.

Ainsi, à chaque temps de phase, on peut définir un ensemble de systèmes dans l'installation, qui remplissent sélectivement une fonction de production, d'élution, de dépressurisation, de repressurisation continue ou de repressurisation finale, et qui comprennent chacun au moins deux organes reliés entre eux par une conduite de raccordement portant une vanne ouverte, de manière variable au cours du temps de phase, sous la commande de l'unité de commande 8.

L'ouverture de chacune des vannes de l'installation est caractérisée par un paramètre d'ouverture de la vanne. Pour l'exemple de la description ici faite, le paramètre utilisé est obtenu à partir du CV de la vanne, paramètre proportionnel au débit passant à travers la vanne. A partir du CV, on obtient le paramètre d'ouverture de la vanne (pourcentage d'ouverture) par exemple par application d'une relation linéaire ou non-linéaire fournie par le fabricant de la vanne. Néanmoins, on peut utiliser tout type de paramètre adapté dans le cadre de l'invention, tel que la position de la vanne, ou autre.

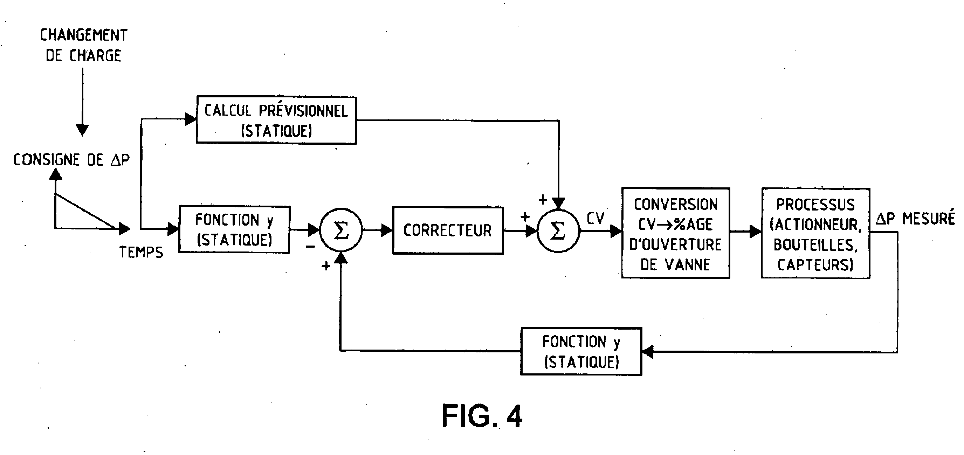

Pour chacune des vannes placées sur une conduite de raccordement reliant entre eux deux organes tels que deux bouteilles d'adsorbant ou une bouteille d'adsorbant et une conduite, on met en oeuvre le procédé décrit ci-après, présenté de manière synthétique sur la figure 4.

De manière répétée au cours de chaque étape :

- on calcule une valeur de consigne pour un paramètre physique de l'écoulement tel la différence de pression entre les deux organes,
- à partir de la valeur de consigne, on calcule un CV prévisionnel pour la vanne en question,
- on mesure une valeur réelle du paramètre physique de l'écoulement, tel une différence de pression réelle entre les deux bouteilles d'adsorbant,
- on calcule la commande de CV à appliquer à la vanne à partir du CV prévisionnel, et d'un paramètre correcteur appliqué à l'erreur entre une fonction de la valeur mesurée et la fonction de la valeur de consigne pour le paramètre physique de l'écoulement, tel la différence de pression mesuré et la valeur de consigne pour la différence de pression,
- on modifie (si nécessaire) l'ouverture de la vanne.

On notera en particulier que la régulation peut être mise en oeuvre en fonction de la différence de pression, ou d'une fonction y appropriée de cette différence de pression, y pouvant par exemple être la fonction identité, une fonction de normalisation, une racine carrée, ou autre...

Le paramètre physique de l'écoulement peut être une différence de pression, un débit, ou tout autre paramètre approprié. Par exemple, on pourrait utiliser comme paramètre physique de l'écoulement, dans le cadre du procédé de réglage, la vitesse d'attrition dans une bouteille fournissant le gaz lors d'une étape d'équilibrage, ou le débit sortant pour les étapes d'élution ou de dépressurisation du procédé de production.

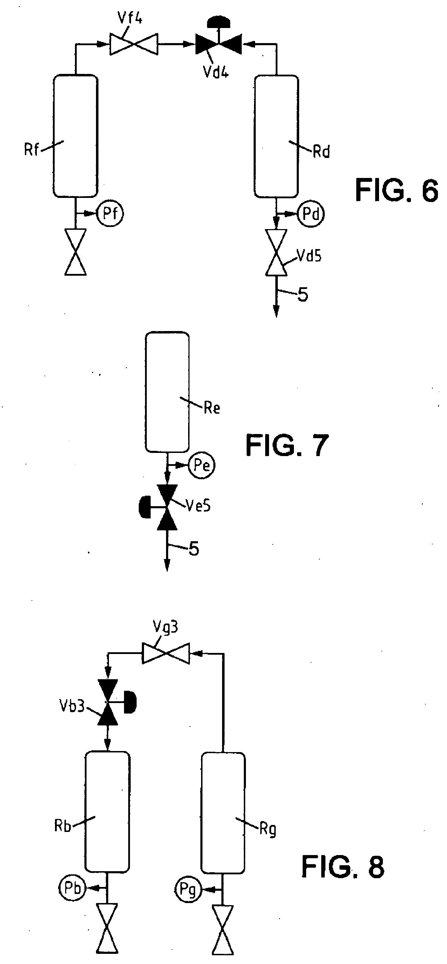

Le ou les paramètres correcteur sont fixés une fois pour toutes, pour chaque étape choisie parmi une étape d'élution, d'équilibrage, de dépressurisation, de repressurisation continue ou de repressurisation finale, lors de la mise en oeuvre d'un procédé de réglage de l'unité de commande de l'installation au cours duquel le ou les paramètres correcteurs sont définis comme explicité ci-après en relation avec les figures 6 à 12.

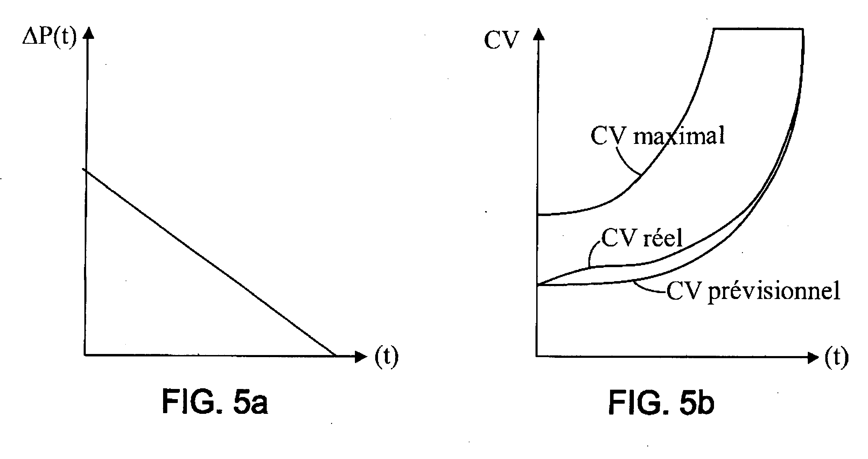

Pour chaque étape, on calcule la valeur de consigne à chaque temps t, par exemple de manière linéaire, comme représenté sur la Figure 5a, entre la différence de pression mesurée au début du temps d'étape et la consigne de différence de pression à obtenir à la fin du temps d'étape :

$$\Delta P(t) = \Delta P_{init} + (\Delta P_{final} - \Delta P_{init})\frac{t}{Tsp},$$

où

$\Delta P(t)$ est la différence de pression au temps t,
$\Delta P_{init}$ est la différence de pression au début du temps d'étape,
$\Delta P_{final}$ est la consigne de différence de pression à la fin du temps d'étape,
t est le timer de l'étape considérée, et
$Tsp$ est la durée prévue de l'étape considérée.

Néanmoins, la valeur de consigne pourrait être obtenue par toute autre fonction décroissante appropriée telle qu'un carré, une exponentielle, ou autre.

Dans certains modes de réalisation, on peut prévoir que le CV est gardé constant pendant un délai transitoire au début de chaque étape, pendant quelques dixièmes de secondes à quelques secondes (par exemple de 1 à 5 secondes), avant de mettre en oeuvre le procédé ici décrit. Pendant ce délai transitoire, le débit et la variation de pression peuvent s'installer.

En outre, pour des aspects de sécurité, il peut être, dans certaines applications, utile de faire en sorte, par construction, que la commande de CV appliquée à la vanne ne dépasse pas un CV maximal autorisé correspondant à une vitesse d'attrition du gaz dans les bouteilles. L'évolution dans le temps de ces valeurs est représentée à titre d'exemple sur la figure 5b pour une étape d'équilibrage.

Alors, on inclut dans le calcul de la commande de CV une comparaison de la commande de CV calculée avec le CV maximal autorisé pour la vanne, calculé par ailleurs afin de respecter une vitesse d'écoulement correcte dans la vanne, et on envoie à la vanne le CV maximal si la commande de CV calculée est supérieure au CV maximal.

Pour l'estimation du CV, on peut par exemple utiliser le modèle établi par la société américaine des instruments (l'Instrument Society of America (I.S.A.)) dans ISA-S75.01-1985 (R 1995) « Flow Equation for Sizing Control Valves » (« équation d'écoulement pour le dimensionnement de vannes de contrôle »), et donnant une relation entre CV, débit de la vanne, et pression en amont et en aval de la vanne. Alternativement, on pourrait utiliser tout autre relation adaptée, basée sur une norme, l'expérience, ou autre.

Le modèle de l'I.S.A. spécifie que ces paramètres sont liés par la formule :

$$CV(t) = \frac{Q}{395F_P}\frac{1}{P_{amont}(t).Y}\sqrt{\frac{S_g TZ}{x(t)}} , \quad (1)$$

dans laquelle :

Q est le débit de la vanne [Nm$^3$/h],
$P_{amont}$ est la pression amont de la vanne [bara],
Y est le facteur d'expansion de la vanne Y=(1-x(t)/3F$_k$x$_t$), borné entre 0,67 et 1,
x= $\Delta P$/ P$_{amont,}$ x étant saturé à X$_t$ (correspondant à x pour un écoulement gazeux critique) [sans unité],
$\Delta P$ est la différence de pression entre la pression amont et la pression aval [barg],
F$_P$ est un facteur de géométrie lié à l'ajustement de la vanne à la tuyauterie [sans unité],
F$_k$ = k/1,40 où k = C$_P$/C$_V$ est le rapport des chaleurs spécifiques du gaz [sans unité],
S$_g$ est la gravité spécifique du gaz par rapport à l'air [sans unité],
T est la température amont du gaz [K], et
Z est le facteur de compressibilité du gaz [sans unité].

Bien entendu, on peut utiliser toute autre relation adaptée liant CV, débit et pression, en particulier si les vannes sont équipées de silencieux.

Pour l'exemple présenté ici, on estime $F_p$, Z et $F_k$ sensiblement égaux à 1, néanmoins on pourra utiliser toute relation adaptée pour les valeurs de ces paramètres.

L'équation présentée permet de calculer le CV prévisionnel à partir de la consigne $\Delta P(t)$ (cf. Figure 5a) en fonction des autres paramètres de la vanne. Néanmoins, dans le cadre de l'invention, on pourrait également calculer par exemple le débit en fonction des paramètres de la vanne tels le CV.

Les figures 6 à 10 représentent des modèles des différentes étapes du procédé de production de gaz permettant chacun de déterminer une valeur de paramètre correcteur à régler pour l'unité de commande lors de la mise en oeuvre du procédé de réglage selon l'invention.

La figure 6 représente une étape d'élution entre la bouteille Rf et la bouteille Rd (FIG. 2). Les vannes Vf4 et Vd5 sont entièrement ouvertes au cours de cette étape, la vanne Vd4 étant pilotée.

De manière théorique, on peut écrire que la pression Pf de la bouteille Rf est soumise à la relation :

$$\frac{dPf}{dt} = -\frac{Q_{d4}}{3600V_{eq}} \, , \quad (2)$$

où $V_{eq}$ est le volume équivalent (débit d'hydrogène désorbé par bar) [Nm$^3$ H$_2$/bar].

La pression Pd de la bouteille Rd est la pression de la conduite 5 d'évacuation du gaz résiduaire, qu'on peut considérer comme constante, et par conséquent $dPf/dt = d\Delta P/dt$.

En combinant les équations (1), (2) et l'expression de Y, on obtient pour l'étape d'élution un terme prévisionnel de CV :

$$CV(t) = \frac{Q_{d4}}{395F_P} \frac{\sqrt{\dfrac{S_g TZ\left(P_{résiduaire,init} + \Delta P_{init} - \dfrac{Q_{d4}}{3600V_{eq}} t\right)}{\Delta P_{init} - \dfrac{Q_{d4}}{3600V_{eq}} t}}}{P_{résiduaire,init} + \Delta P_{init} - \dfrac{Q_{d4}}{3600V_{eq}} t - \dfrac{\Delta P_{init} - \dfrac{Q_{d4}}{3600V_{eq}} t}{3F_k x_t}} \quad (3) \, ,$$

dans laquelle :

$Q_{d4} = (\Delta P_{init} - \Delta P_{final,SP}) \, 3600V_{eq}/T_{SP}$,

$\Delta P_{final,SP}$ est la consigne d'écart de pression final pour l'étape d'élution,

$\Delta P_{init}$ est l'écart de pression mesuré au début de l'étape d'élution,

$P_{résiduaire,init}$ est la pression dans la conduite 5, mesurée au début de l'étape d'élution, et

$T_{SP}$ est la consigne de durée de l'étape d'élution.

Pour le contrôle de la vanne, on obtient à partir des expressions (1) et (2) une relation entre la variable mesurée (la pression) et la variable de contrôle (le CV) :

$$\frac{d\Delta P}{\sqrt{\Delta P}\sqrt{P_{résiduaire,init} + \Delta P}} = -\left[\frac{395YF_P}{3600V_{eq}}\sqrt{\frac{1}{S_g TZ}}\right] CV(t)dt \quad (4) \, .$$

Cette relation se résout, en considérant Y pour une étape d'élution comme constant, en :

$$\operatorname{arcsin} h\left(\sqrt{\frac{\Delta P}{P_{résiduaire,init}}}\right) = \operatorname{arcsin} h\left(\sqrt{\frac{\Delta P_{init}}{P_{résiduaire,init}}}\right) - \frac{1}{2}\frac{395 Y F_P}{3600 V_{eq}}\sqrt{\frac{1}{S_g T Z}}\left[\int_0^t CV dt\right]_{saturé}$$

(5),

où la saturation signifie que $\Delta P$ ne peut pas descendre en dessous de 0. L'équation (5) s'écrit, en terme de fonction de transfert comme un système intégral saturé :

$$\operatorname{arcsin} h\left(\sqrt{\frac{\Delta P}{P_{résiduaire,init}}}\right) = -K\left[\frac{CV}{s}\right]_{saturé} \quad (6)$$

où

$$K = \frac{1}{2}\frac{395 Y F_P}{3600 V_{eq}}\sqrt{\frac{1}{S_g T Z}} \quad (7).$$

Le facteur K ainsi obtenu dépend uniquement des paramètres caractéristiques de l'installation $F_p$ et $V_{éq}$, et des paramètres caractéristiques de l'écoulement $S_g$, T et Z. En outre, pour une étape d'élution, Y est considéré comme constant égal à 0,67.

Le système se linéarise par rapport à CV en régulant, non pas par rapport à $\Delta P$ mais par rapport à une fonction non linéaire $y(\Delta P) = (\operatorname{arcsinh}[\sqrt{(\Delta P/ P_{résiduaire,init})}]$, ou de manière approchée par rapport à $y(\Delta P) = [\sqrt{(\Delta P/P_{résiduaire,init})}]$.

On peut par exemple utiliser la méthode de Ziegler-Nichols qui permet de déterminer les paramètres d'un correcteur PID pour un système intégrateur du type $G(s)=e^{-\theta s}.K/s$ où $\theta$ est un retard. Si on définit le correcteur proportionnel de gain $K_P$, cette méthode donne $K_P=1/K\theta$.

$\theta$ peut par exemple être déterminé par simulation, en perturbant le processus à réguler. Ce paramètre peut par exemple être choisi entre environ 5 secondes et 100 secondes. Un choix de $\theta$ suffisamment grand permet d'éviter de trop grandes oscillations de CV. Un choix de $\theta$ suffisamment petit permet d'atteindre les pressions demandées.

On peut en outre ajouter un terme intégral $K_I$ dans le correcteur de pression. On choisit $K_I$ = Ratio x Kp, comme par exemple $K_I=0.1K_P$. De ce fait, $K_I$ dépend également uniquement des paramètres caractéristiques de l'installation et de l'écoulement.

Le CV réel s'écrit alors :

$$CV=\max[z^{-1}CV+(1-z^{-1})(CV_{prévisionnel}+K_p\varepsilon)+K_I\varepsilon \; ; 0], \quad (8)$$

Où :

$\varepsilon=y_{mes}-y_{SP}$, où $y_{mes}$ est la fonction de la différence de pression mesurée $\Delta P$ utilisée pour la régulation (par exemple $y=\operatorname{arcsinh}[\sqrt{(\Delta P/ P_{résiduaire,init})}]$ou $y = \sqrt{(\Delta P/ P_{résidyaire,init})}$, et $y_{sp}$ est la même fonction appliquée à la consigne de différence de pression ($P_{résiduaire,init}$ est ici utilisé pour normaliser l'erreur entre la consigne d'écart de pression et l'écart de pression mesurée), et

l'opérateur $z^{-1}$ est l'opérateur retard d'une période pour un système échantillonné.

L'utilisation d'une fonction y non linéaire permet d'améliorer la robustesse des paramètres correcteurs face à des perturbations.

On notera ici que dans le cas d'un système purement proportionnel, où $K_I$ est choisi nul, l'équation (8) s'écrit :

$$CV = \max\{CV_{\text{prévisionnel}} + K_p \varepsilon ; 0\}, \quad (8')$$

Le paramètre d'ouverture de la vanne est directement obtenu à partir du paramètre prévisionnel d'ouverture de la vanne et du paramètre correcteur proportionnel appliqué à l'erreur entre la fonction de la valeur de consigne actuelle et la fonction de la valeur mesurée actuelle.

Dans le cas proportionnel-intégral, le CV est en outre obtenu à partir d'un paramètre correcteur intégral appliqué à cette erreur, d'une valeur antérieure du paramètre d'ouverture, d'une valeur antérieure du paramètre prévisionnel d'ouverture et du paramètre correcteur proportionnel appliqué à une valeur antérieure de l'erreur.

Dans une variante de réalisation, on peut en outre s'assurer qu'un problème de régulation ne va pas conduire à un écoulement à une vitesse trop rapide dans les bouteilles. Un tel problème de régulation pourrait par exemple être dû à un réglage trop élevé d'un correcteur ou à la défaillance d'un capteur dont la mesure est utilisée par le correcteur. Pour cela, on calcule le $CV_{max}$ qui correspond à un CV maximal autorisé pour la vanne au cours de l'étape. Par exemple, le $CV_{max}$ correspond au CV permettant l'écoulement du gaz dans la bouteille à une fraction prédéterminée x de la vitesse d'attrition, qui peut être approchée par la formule de Ledoux (par exemple x=60% pour l'étape d'élution ci-décrite).

La vitesse du gaz dans la bouteille peut par exemple s'écrire :

$$v = \frac{Q}{3600 S_{ads}} \frac{1,01325}{P_{ads}} \frac{T_{ads}}{273,15}, \quad (9),$$

où :

v est la vitesse en haut ou en bas de la bouteille [m/s],
Q est le débit passant en haut ou en bas de la bouteille [Nm$^3$/h],
$T_{ads}$ est la température dans la bouteille [K],
$P_{ads}$ est la pression dans la bouteille [bara], et
$S_{ads}$ est la section de la bouteille [m$^2$].

En outre, la vitesse de Ledoux peut s'écrire :

$$v_{Ledoux} = \sqrt{D_e \rho_{ads} \frac{1,01325 T_{ads}}{273,15 \rho_{gaz} P_{ads}}} \quad (10),$$

où

De est le diamètre équivalent moyen de l'adsorbant dans la bouteille [m],
$\rho_{ads}$ est la masse volumique moyenne de l'adsorbant dans la bouteille [kg/m$^3$], et
$\rho_{gaz}$ est la masse volumique du gaz [kg/Nm$^3$].

De (9) et (10) on obtient une valeur du débit maximal à ne pas dépasser dans la bouteille. En combinant avec (1), et $\rho_{gaz} = 1,29 S_g$, on obtient une expression du $CV_{max}$ autorisé pour la vanne :

$$CV_{MAX}(t) = \frac{x.0,4.3600 S_{ads}}{395 F_P Y} \sqrt{D_e \frac{\rho_{ads}}{1,29} \cdot \frac{273,15}{1,01325} Z} \frac{1}{\sqrt{\Delta P_{mes}(t)}} \quad (11).$$

On notera que le $CV_{MAX}$ ainsi défini ne dépend pas de la masse volumique du gaz, ce qui est intéressant en cas de problème non identifié sur un gaz'.

Le $CV_{MAX}$ peut être utilisé dans le cadre de la régulation, en modifiant, selon cette variante de réalisation, l'équation (8) de la manière suivante, pour implanter la saturation à $CV_{MAX}$ à l'intérieur de l'intégrateur :

$$CV=\min[\max[z^{-1}CV+(1-z^{-1})(CV_{prévisionnel}+K_p\varepsilon)+K_I\varepsilon\ ;0]$$
$$;CV_{MAX}],\ (12).$$

On régule ainsi en pression la vanne $V_{d4}$.

La figure 7 représente une étape de dépressurisation de la bouteille Re (FIG. 2). La vanne Ve5 est pilotée au cours de cette étape. Le deuxième organe est ici la conduite 5 d'évacuation de gaz résiduaire.

De manière théorique, on peut écrire que la pression Pe de la bouteille Re est soumise à la relation :

$$\frac{dPe}{dt}=-\frac{Q_{e5}}{3600V_{eq}}\quad(13).$$

On peut ici utiliser le volume équivalent, mais le gaz sortant de la bouteille étant relativement différent de l'hydrogène pur, on pourra également raffiner l'estimation de cette grandeur.

L'étape de dépressurisation est assez similaire à l'étape d'élution, à ceci près que la consigne d'écart final de pression est nulle. Par conséquent, on obtient pour l'étape de dépressurisation un terme prévisionnel de CV :

$$CV(t)=\frac{Q_{e5}}{395F_P}\frac{\sqrt{\dfrac{S_gTZ(P_{résiduaire,init}+\Delta P_{init}-{Q_{e5}}/{3600V_{eq}}\,t)}{\Delta P_{init}-{Q_{e5}}/{3600V_{eq}}\,t}}}{P_{résiduaire,init}+\Delta P_{init}-{Q_{e5}}/{3600V_{eq}}\,t-\dfrac{\Delta P_{init}-{Q_{e5}}/{3600V_{eq}}\,t}{3F_kx_t}}\quad(14),$$

dans laquelle :

$Q_{e5}=(\Delta P_{init}-\Delta P_{final,SP})\,3600V_{eq}/T_{SP}$,

$\Delta P_{final,SP}$ est la consigne d'écart de pression final pour l'étape de dépressurisation (=0),

$\Delta P_{init}$ est l'écart de pression mesurée au début de l'étape de dépressurisation,

$P_{réliduaire,init}$ est la pression dans la ligne 5, mesurée en début de l'étape de dépressurisation, et

$T_{SP}$ est la consigne de durée de l'étape de dépressurisation.

Pour le contrôle de la vanne, on peut également écrire :

$$\arcsin h\left(\sqrt{\frac{\Delta P}{P_{résiduaire,init}}}\right)=-K\left[\frac{CV}{s}\right]_{saturé}\quad(15)\quad\text{où}\quad K=\frac{1}{2}\frac{395YF_P}{3600V_{eq}}\sqrt{\frac{1}{S_gTZ}}$$

$$(16).$$

Le facteur K ainsi obtenu dépend uniquement des paramètres caractéristiques de l'installation $F_p$ et $V_{eq}$, et des paramètres caractéristiques de l'écoulement $S_g$, T et Z. En outre, pour une étape de dépressurisation, Y est considéré comme constant égal à 0,83.

Par conséquent, les relations établies pour l'élution sont également valables pour l'étape de dépressurisation, à savoir :

$$CV=\max[z^{-1}CV+(1-z^{-1})(CV_{prévisionnel}+K_p\varepsilon)+K_I\varepsilon\ ;0],\ (17),$$

et, dans la variante :

$$CV=\min[\max[z^{-1}CV+(1-z^{-1})(CV_{prévisionnel}+K_P\varepsilon)+K_I\varepsilon \;;0]$$
$$;CV_{MAX}],(18),$$

x étant par exemple égal à 160% pour l'étape de dépressurisation.

On régule ainsi en pression la vanne $V_{e5}$.

La figure 8 représente une étape d'équilibrage (sans repressurisation continue) entre la bouteille Rg et la bouteille Rb (FIG. 2). Le gaz s'écoule depuis la bouteille Rg vers la bouteille Rb jusqu'à obtenir une différence de pression donnée, éventuellement nulle, entre ces deux bouteilles. La vanne Vg3 est entièrement ouverte au cours de cette étape, la vanne Vb3 étant pilotée.

De manière théorique, on peut écrire que les pressions des bouteilles Rb et Rg sont soumises aux relations :

$$\frac{dPb}{dt}=\frac{Q_{b3}}{3600V_{eq}},\quad(19),$$

et

$$\frac{dPg}{dt}=-\frac{Q_{b3}}{3600V_{eq}}\quad(20)$$

En combinant les équations (1), (19) et (20), on obtient pour l'étape d'équilibrage un terme prévisionnel de CV :

$$CV(t)=\frac{Q_{b3}}{395F_P}\frac{\sqrt{\dfrac{S_gTZ(P_{g,init}-\dfrac{Q_{b3}}{3600V_{eq}}t)}{\Delta P_{init}-\dfrac{2Q_{b3}}{3600V_{eq}}t}}}{P_{g,init}-\dfrac{Q_{b3}}{3600V_{eq}}t-\dfrac{\Delta P_{init}-\dfrac{2Q_{b3}}{3600V_{eq}}t}{3F_kx_t}}\quad(21),$$

dans laquelle :

$$2.Q_{b3}=(\Delta P_{init}-\Delta P_{final,SP})3600V_{eq}/T_{SP},$$

$\Delta P_{final,SP}$ est la consigne d'écart de pression final pour l'étape d'équilibrage (par exemple égal à 0),
$\Delta P_{init}$ est l'écart de pression mesurée au début de l'étape d'équilibrage,
$T_{SP}$ est la consigne de durée de l'étape d'équilibrage.

Pour le contrôle de la vanne, on obtient à partir des expressions (19), (20) et (1) une relation entre la variable mesurée (la pression) et la variable de contrôle (le CV) :

$$\frac{d\Delta P}{\sqrt{\Delta P}\sqrt{P_{b,init} + P_{g,init} + \Delta P}} = -\left[\frac{395YF_P}{3600V_{eq}}\sqrt{\frac{2}{S_g TZ}}\right]CV(t)dt \quad (22).$$

Cette relation se résout en considérant Y comme constant pour une étape d'équilibrage en :

$$\text{arcsin}\,h\left(\sqrt{\frac{\Delta P}{P_{b,init} + P_{g,init}}}\right) = \text{arcsin}\,h\left(\sqrt{\frac{\Delta P_{init}}{P_{b,init} + P_{g,init}}}\right) - \frac{1}{\sqrt{2}}\frac{395YF_P}{3600V_{eq}}\sqrt{\frac{1}{S_g TZ}}\left[\int_0^t CV_{.}\right.$$

$$(23),$$

L'équation (23) s'écrit également, en terme de fonction de transfert, comme un système intégral saturé :

$$\text{arcsin}\,h\left(\sqrt{\frac{\Delta P}{P_{b,init} + P_{g,init}}}\right) = -K\left[\frac{CV}{s}\right]_{saturé} \qquad (24)$$

où

$$K = \frac{1}{\sqrt{2}}\frac{395YF_P}{3600V_{eq}}\sqrt{\frac{1}{S_g TZ}} \quad (25).$$

Le facteur K ainsi obtenu dépend uniquement des paramètres caractéristiques de l'installation $F_p$ et $V_{éq}$, et des paramètres caractéristiques de l'écoulement $S_g$, T et Z. En outre, pour une étape d'équilibrage sans repressurisation continue, Y est considéré comme constant égal à 0,8.

Le système se linéarise comme décrit précédemment.

De même, dans la variante de réalisation, une valeur de x=60% peut être choisie pour l'étape d'équilibrage, et le $CV_{MAX}$ peut être calculé en fonction, en relation avec l'équation (12).

On régule ainsi en pression la vanne $V_{b3}$.

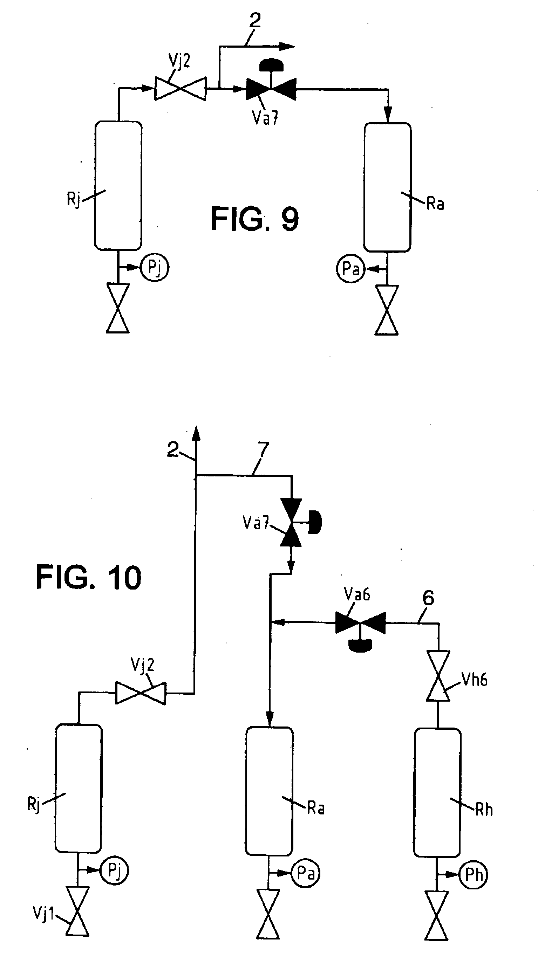

La figure 9 représente une étape de repressurisation finale (droite de la colonne a) entre la bouteille Rj et la bouteille Ra (FIG. 2). La vanne Vj2 est entièrement ouverte au cours de cette étape, la vanne Va7 étant pilotée.

De manière théorique, on peut écrire que la pression Pa de la bouteille Ra est soumise à la relation :

$$\frac{dPa}{dt} = \frac{Q_{a7}}{3600V_{eq}}, \quad (26)$$

La pression de production $P_{prod}$ dans la conduite de production 2 étant principalement constante, dPa/dt=-d∆P/dt.

En combinant les équations (1) et (26) on obtient pour l'étape de repressurisation finale un terme prévisionnel de CV.

$$CV(t) = \frac{Q_{a7}}{395F_P} \cdot \frac{\sqrt{\Delta P_{init} - \dfrac{Q_{a7}/3600V_{eq}}{\Delta P_{init} - \dfrac{Q_{a7}/3600V_{eq} \, t}{3F_k x_t}} \, t}}{P_{prod,init} - \dfrac{\Delta P_{init} - \dfrac{Q_{a7}/3600V_{eq}}{3F_k x_t} \, t}{3F_k x_t}} \quad (27),$$

dans laquelle :

$P_{prod,init}$ est la pression de production mesurée au début de l'étape de repressurisation finale,
$Qa7 = (\Delta P_{init} - \Delta P_{final,SP})3600 \, V_{eq}/Tsp$,
$\Delta P_{final,SP}$ est la consigne d'écart de pression final pour l'étape de repressurisation finale,
$\Delta P_{init}$ est l'écart de pression mesurée au début de l'étape de repressurisation finale, et
$T_{sp}$ est la consigne de durée de l'étape de repressurisation finale.

Pour le contrôle de la vanne, on obtient à partir des expressions (1) et (26) une relation entre la variable mesurée (la pression) et la variable de contrôle (le CV) :

$$\frac{d\Delta P}{\sqrt{\Delta P}} = -\left[\frac{395YF_P}{3600V_{eq}} \sqrt{\frac{P_{prod,init}}{S_g TZ}}\right] CV(t)dt \quad (28).$$

Cette relation se résout en considérant Y comme constant en étape de repressurisation finale, en :

$$\left(\sqrt{\frac{\Delta P}{P_{prod,init}}}\right) = \left(\sqrt{\frac{\Delta P_{init}}{P_{prod,init}}}\right) - \frac{1}{2}\frac{395YF_P}{3600V_{eq}} \sqrt{\frac{1}{S_g TZ}} \left[\int_0^t CVdt\right]_{saturé} \quad (29).$$

L'équation (29) s'écrit, en terme de fonction de transfert comme un système intégral saturé :

$$\left(\sqrt{\frac{\Delta P}{P_{prod,init}}}\right) = -K\left[\frac{CV}{s}\right]_{saturé} \quad (30) \quad \text{où} \quad K = \frac{1}{2}\frac{395YF_P}{3600V_{eq}} \sqrt{\frac{1}{S_g TZ}} \quad (31).$$

Le facteur K ainsi obtenu dépend uniquement des paramètres caractéristiques de l'installation $F_p$ et $V_{éq}$, et des paramètres caractéristiques de l'écoulement $S_g$, T et Z. En outre, pour une étape de repressurisation finale, Y est considéré comme constant égal à 0,9.
Le système se linéarise par rapport à CV en régulant, non pas par rapport à $\text{arcsinh}[\sqrt{(\Delta P/P_{prod,init})}]$ mais directement par rapport à $[\sqrt{(\Delta P/P_{prod,init})}]$.
Dans la variante de réalisation, on obtient une expression du $CV_{max}$ autorisé pour la vanne :

$$CV_{MAX}(t) = \frac{x.0,4.3600S_{ads}}{395F_P Y} \sqrt{D_e \frac{\rho_{ads}}{1,29} \cdot \frac{273,15}{1,01325} Z} \cdot \frac{\sqrt{P_a(t)}}{\sqrt{\Delta P(t)P_{prod}(t)}} \quad (32),$$

dans lequel on pourra par exemple prendre x=160% correspondant à un facteur de sécurité pour une bouteille parcourue à contre-courant.

Le $CV_{MAX}$ peut être utilisé dans le cadre de la régulation, en modifiant de même l'équation (8) pour implanter la saturation à $CV_{MAX}$ à l'intérieur de l'intégrateur.

On régule ainsi en pression la vanne $V_{a7}$.

La figure 10 représente une étape d'équilibrage avec repressurisation continue entre la bouteille Rj et la bouteille Ra (FIG. 2 partie gauche de la colonne a). Les vannes Vj2 et Vh6 sont pleines ouvertes. Les vannes Va6 et Va7 sont pilotées.

Pour le contrôle de la vanne d'équilibrage $V_{a6}$, il est difficile d'obtenir une expression similaire à l'expression (22), du fait de l'influence combinée de l'équilibrage et de la repressurisation continue. Au premier ordre, on peut envisager de négliger l'effet de la repressurisation continue et de considérer le cas d'un équilibrage seul. On se rabat alors sur le cas étudié précédemment en relation avec la figure 8.

On régule ainsi en pression la vanne $V_{a6}$.

Pour le contrôle de la vanne Va7, le terme prévisionnel de CV s'écrit :

$$CV_{a7}(t) = \frac{Q_{SP}}{395F_P} \frac{\sqrt{\dfrac{S_g TZ P_{prod}}{\Delta P_{init} - Q_{a6}\big/3600V_{eq}\, t}}}{P_{prod} - \dfrac{\Delta P_{init} - Q_{a6}\big/3600V_{eq}\, t}{3F_k x_t}} , \quad (33),$$

dans laquelle :

$Q_{SP}$ est la consigne de débit, et
$Q_{a6}$ est le débit calculé pour la vanne $V_{a6}$ d'équilibrage, comme décrit précédemment en relation avec la figure 9,
et $\Delta P_{init} = P_{prod,init} - P_{a,init}$.

On peut chercher à piloter la vanne Va7 en débit, afin de pouvoir obtenir un débit de gaz de production sensiblement constant dans la conduite de production 2. Par conséquent, on cherche une relation entre le débit Qa7 et le CV de cette vanne :

$$Q = 395 Y F_P \sqrt{\frac{P_{prod}}{S_g TZ}} CV(t) \sqrt{P_{prod} - P_a} \quad (34).$$

On peut par exemple modéliser ce système en posant

$$\frac{Q}{\sqrt{P_{prod,init}}\sqrt{P_{prod,init} - P_{a,init}}} = K.CV \quad (35)$$

avec

$$K = \frac{395 Y F p}{\sqrt{S g T Z}} \quad (36).$$

Le facteur K ainsi obtenu dépend uniquement du paramètre caractéristique de l'installation $F_p$ et des paramètres

caractéristiques de l'écoulement $S_g$, T et Z. En outre, pour une étape de repressurisation continue, Y est considéré comme constant égal à 0,9.

La consigne de débit peut par exemple être obtenue à partir de la moyenne de la différence entre le débit en entrée de l'installation et le débit de production pendant le temps de phase précédent (dans sa partie « repressurisation finale »). Cette consigne, calculée sous forme de différence, n'est pas rigoureusement égale au débit passant dans la vanne de repressurisation continue parce qu'il y a un biais lié à l'adsorption dans la bouteille en production. Elle devient cependant cohérente si la mesure utilisée par le régulateur est elle aussi l'écart entre les deux débits. Si le débit d'entrée est amené à changer, on peut appliquer un coefficient correcteur à la consigne ainsi obtenue.

Ce système s'écrit, en terme de fonction de transfert comme un système proportionnel.

La vanne de repressurisation continue est donc réglée en débit selon un modèle de type proportionnel de gain K. Si l'on considère un premier ordre en boucle fermée de constante de temps θ, alors le correcteur associé est un correcteur intégrateur.

Comme précédemment, θ peut par exemple être déterminé par simulation, en perturbant le processus à réguler. Ce paramètre peut par exemple être choisi entre environ 5 secondes et 100 secondes.

On régule ainsi en pression la vanne $V_{a7}$.

Dans les exemples présentés sur les figures 9 et 10, la repressurisation se fait à partir de la bouteille en production reliée à la canalisation de production 2. Dans d'autres exemples de réalisation, la repressurisation pourrait être effectuée depuis la conduite d'alimentation 3, en utilisant comme paramètre physique de l'écoulement, une différence de pression entre la bouteille en production et la bouteille en cours de repressurisation.

L'invention a ici été décrite pour un cycle normal de fonctionnement d'un PSA. Cependant, elle peut tout à fait s'appliquer à un cycle exceptionnel de PSA, tel que par exemple un cycle à 8 bouteilles lorsque l'une au moins des bouteilles est en maintenance, ou autre.

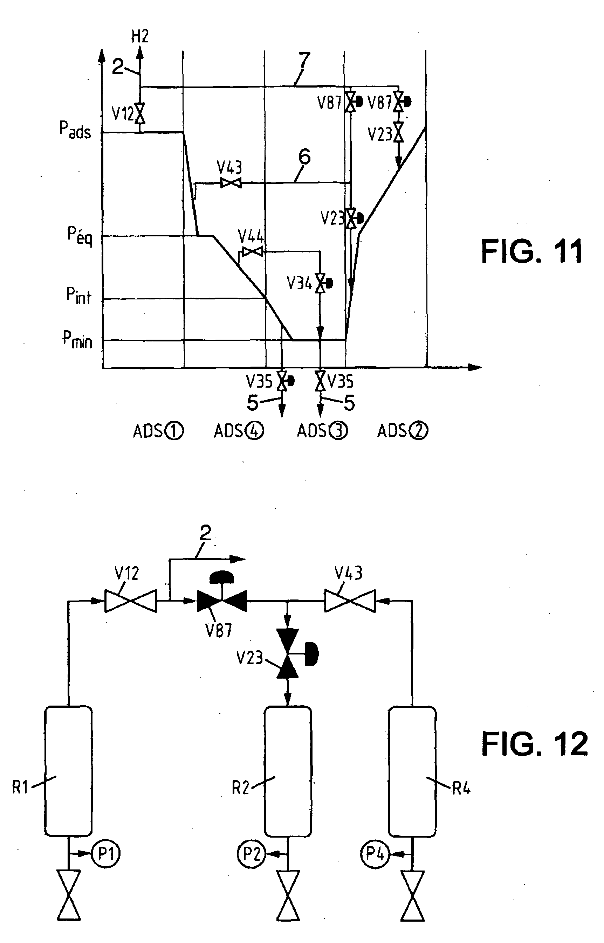

Bien que la description ait ici été donnée en référence à un PSA comportant 10 bouteilles, il va de soi que la régulation ici décrite pourrait également s'adapter à d'autres types de PSA, et par exemple à un PSA à 4 bouteilles, dont le cycle est représenté sur la figure 11.

On remarquera que dans cet exemple de réalisation, le modèle combiné de l'équilibrage et de la repressurisation continue ne correspond pas exactement à celui présenté dans le premier mode de réalisation. En effet, la vanne V23 se situe ici en aval de la jonction entre les conduites de raccordement 6 et 7, ce qui n'est pas le cas sur la figure 9.

Ainsi, la figure 12 représente le modèle combiné d'équilibrage et de la repressurisation continue pour ce deuxième exemple de réalisation. Les vannes V43 et V12 sont entièrement ouvertes au cours de cette étape, la vanne V87 (ou vanne de repressurisation) et la vanne V23 (ou vanne d'équilibrage) sont pilotées.

De manière théorique, on peut écrire que la pression P4 de la bouteille R4 qui fournit le gaz d'équilibrage est soumise à la relation :

$$\frac{dP4}{dt} = -\frac{(Q_{23} - Q_{SP})}{3600V_{eq}}, \quad (37).$$

La pression P2 de la bouteille R2 qui reçoit le gaz est soumise à la relation :

$$\frac{dP2}{dt} = \frac{Q_{23}}{3600V_{eq}}, \quad (38).$$

En combinant les équations (1), (37) et (38) on obtient pour la vanne V87 et l'étape de repressurisation continue un terme prévisionnel de CV :

$$CV(t) = \frac{Q_{SP}}{395F_P} \frac{\sqrt{\dfrac{S_g TZ P_{prod,init}}{\Delta P_{init} + (Q_{23} - Q_{SP})/3600 V_{eq}\, t}}}{P_{prod,init} - \dfrac{\Delta P_{init} + (Q_{23} - Q_{SP})/3600 V_{eq}\, t}{3F_k x_t}} \quad (39),$$

dans laquelle :

$\Delta P_{init} = P_{prod,init} - P_{4,init}$.

On notera ici que, pour estimer la vitesse maximale autorisée, on peut prendre en compte le fait que le débit passant dans la bouteille en co-courant est égal à la différence entre le débit passant dans la vanne d'équilibrage V23 et le débit passant dans la vanne de repressurisation continue V87.

La vitesse du gaz peut alors s'écrire :

$$v = \frac{Q_{23} - Q_{87}}{3600 S_{ads}} \frac{1,01325}{P_{ads}} \frac{T_{ads}}{273,15}, \quad (40),$$

Par conséquent, et comme $p_{gaz} = 1,29 S_g$, on obtient une expression du $CV_{max}$ autorisé pour la vanne V23 :

$$CV_{MAX}(t) = \left[ \frac{x.0,4.3600 S_{ads}}{441 F_P Y} \sqrt{D_e \frac{\rho_{ads}}{\rho_{gaz}} . \frac{273,15}{1,01325} \frac{P_{mes}(t)}{T_{ads}}} + Q_{87,mes} \right] \frac{\sqrt{S_g T_{ads} Z}}{\sqrt{\Delta P(t) P_{mes}(t)}} \quad (41).$$

On notera qu'on prendra par exemple x=0,6 pour déterminer le facteur de sécurité lié à la bouteille R4.

On régule ainsi en pression la vanne $V_{23}$.

On peut par exemple prévoir que le calcul sera effectué toutes les secondes pour les étapes d'équilibrage et de repressurisation continue, toutes les 2 secondes pour les étapes d'élution et de dépressurisation, et toutes les 4 secondes pour les étapes de repressurisation finale, néanmoins cette périodicité pourra être fixée en fonction de la pente de la rampe de pression à réaliser, par exemple entre 0,1 et 10 secondes.

L'invention n'est ainsi pas limitée aux deux exemples d'installation présentés ici, mais l'homme du métier sera à même de mettre en oeuvre les modèles correspondant à une nouvelle installation, comme ici décrit, pour réguler l'écoulement dans les vannes.

La régulation ici décrite se transpose facilement d'une installation à une autre car les paramètres du processus sont pris en compte automatiquement dans la variable K au cours des réglages.

De manière pratique, au moment de la mise en service de l'installation, le procédé de réglage des paramètres correcteurs de l'unité de commande des vannes d'une installation de production de gaz par adsorption est mis en oeuvre par un logiciel adapté pour régler les correcteurs en fonction des paramètres caractéristiques d'écoulement, d'installation et des paramètres θ et ratio entrés par l'utilisateur, par exemple un logiciel de supervision. Puis, au cours de la production, l'unité de commande pilote l'installation à partir d'un programme automate prenant en compte les paramètres correcteurs réglés pour commander l'ouverture des vannes.

## Revendications

1. Procédé de réglage d'une unité de commande d'une installation de traitement de gaz par adsorption,
   ladite installation étant destinée à mettre en oeuvre un procédé de production de gaz au cours duquel un gaz d'alimentation chargé en impuretés est fourni à l'installation, pour produire au moins un gaz provenant de la purification du gaz d'alimentation, ledit procédé de production comprenant une pluralité d'étapes, au cours desquelles un gaz est soumis à un écoulement dans ladite installation, ledit écoulement présentant un certain nombre de paramètres caractéristiques d'écoulement,
ladite installation comprenant une pluralité d'organes :

- une conduite d'alimentation (1) en un gaz d'alimentation à purifier par adsorption,
- une conduite de production (2) d'un gaz purifié,
- une conduite d'évacuation (5) d'un gaz résiduaire, contenant des impuretés du gaz d'alimentation,
- une pluralité de bouteilles ($R_1$, ..., $R_0$) contenant au moins un matériau adsorbant,

ladite installation comprenant en outre :

- une pluralité de conduites de raccordement (3, 4, 6, 7), chacune reliant entre eux deux desdits organes,
- une vanne sur chacune desdites conduites de raccordement, chaque vanne étant adaptée pour être sélectivement fermée pour interdire un flot de gaz dans la conduite de raccordement, ou ouverte selon un paramètre d'ouverture variable, pour autoriser un flot de gaz dans la conduite de raccordement,

un système étant défini par deux organes reliés entre eux par une conduite de raccordement munie d'une vanne, ladite installation présentant un certain nombre de paramètres caractéristiques d'installation, et

- ladite unité de commande (8), adaptée pour commander l'ouverture de la vanne selon un paramètre d'ouverture pour chaque système, pour chaque étape,
- pour chaque système, un dispositif de détection adapté pour mesurer une valeur mesurée d'un paramètre physique de l'écoulement de gaz pour le système,

ladite unité de commande (8) étant adaptée pour calculer, pour chaque système, un paramètre prévisionnel d'ouverture de la vanne, une valeur de consigne pour ledit paramètre physique de l'écoulement, une erreur entre une fonction de ladite valeur de consigne et la fonction de ladite valeur mesurée,
ladite unité de commande étant adaptée pour commander l'ouverture de la vanne selon ledit paramètre d'ouverture pour chaque système, pour chaque étape, sur la base au moins dudit paramètre prévisionnel d'ouverture de la vanne, et d'au moins un paramètre correcteur appliqué à ladite erreur,
ledit procédé de réglage comprenant une étape (a) au cours de laquelle on règle ledit paramètre correcteur en fonction desdits paramètres caractéristiques d'installation et d'écoulement.

2. Procédé de réglage selon la revendication 1, dans lequel le paramètre correcteur est un paramètre correcteur proportionnel appliqué à une erreur entre la fonction de la valeur de consigne actuelle et la fonction de la valeur mesurée actuelle.

3. Procédé de réglage selon la revendication 2, dans lequel, lors de la mise en oeuvre du procédé de production de gaz, l'unité de commande est adaptée pour commander l'ouverture de la vanne selon en outre un paramètre d'ouverture antérieur pour la vanne, une valeur antérieure du paramètre prévisionnel, ledit paramètre correcteur proportionnel appliqué à une erreur entre la fonction d'une valeur de consigne antérieure pour le paramètre physique de l'écoulement et la fonction d'une valeur mesurée antérieure pour le paramètre physique de l'écoulement, et d'un deuxième paramètre correcteur intégral appliqué à ladite erreur entre la fonction d'une valeur de consigne actuelle pour le paramètre physique de l'écoulement et la fonction d'une valeur mesurée actuelle pour le paramètre physique de l'écoulement,
au cours de l'étape (a) du procédé de réglage, on règle ledit deuxième paramètre correcteur intégral en fonction desdits paramètres caractéristiques d'installation et d'écoulement.

4. Procédé de réglage selon la revendication 1 dans lequel, lors de la mise en oeuvre du procédé de production de gaz, l'unité de commande est adaptée pour commander l'ouverture de la vanne selon en outre un paramètre d'ouverture antérieur pour la vanne, et une valeur antérieure du paramètre prévisionnel, et dans lequel le paramètre correcteur est un paramètre correcteur intégral appliqué à l'erreur entre la fonction de la valeur de consigne antérieure et la fonction de la valeur mesurée antérieure,
procédé de réglage dans lequel, au cours de l'étape (a) on règle ledit paramètre correcteur intégral en fonction des paramètres de l'installation et de l'écoulement.

5. Procédé de réglage selon l'une des revendications 1 à 4, dans lequel, lors de la mise en oeuvre du procédé de production de gaz, l'unité de commande est adaptée pour commander l'ouverture de la vanne selon en outre une valeur maximale autorisée pour ledit paramètre d'ouverture.

**6.** Procédé de production de gaz par adsorption au moyen d'une installation comprenant une unité de commande réglée par un procédé de réglage selon l'une des revendications 1 à 5, ledit procédé de production de gaz comprenant une pluralité d'étapes distinctes s'étendant entre un début de phase et une fin de phase, au cours de chacune desquelles, pour au moins un système comprenant un premier et un deuxième organes, une conduite de raccordement reliant entre eux lesdits premier et deuxième organes, une vanne sur ladite conduite de raccordement, un gaz s'écoulant entre le premier et le deuxième organe, on met en oeuvre de manière répétée les étapes suivantes :

(b)on calcule la valeur de consigne pour le paramètre physique de l'écoulement,

(c)on mesure, par le dispositif de détection, ladite valeur mesurée dudit paramètre physique de l'écoulement,

(d)on calcule le paramètre prévisionnel d'ouverture de la vanne en fonction du temps, des paramètres caractéristiques d'installation et d'écoulement, et de ladite valeur de consigne pour le paramètre physique de l'écoulement, et

(e)on calcule la valeur dudit paramètre d'ouverture en fonction du paramètre correcteur réglé à l'étape (a), appliqué à l'erreur entre la fonction de ladite valeur mesurée et la fonction de ladite valeur de consigne pour ledit paramètre physique de l'écoulement et du paramètre prévisionnel d'ouverture.

**7.** Procédé de production selon la revendication 6, dans lequel on mesure un point de fonctionnement du système en début d'étape, et dans lequel, pendant l'étape (e), ladite erreur est calculée en appliquant à ladite valeur mesurée et à ladite valeur de consigne une fonction non-linéaire de normalisation au point de fonctionnement.

**8.** Procédé de production selon la revendication 6 ou la revendication 7 dans lequel on met en outre en oeuvre, de manière répétée, les étapes suivantes :

(f)on calcule une valeur maximale autorisée pour le paramètre d'ouverture, en fonction du temps, des paramètres caractéristiques de l'installation et de l'écoulement, et de ladite valeur mesurée pour le paramètre physique de l'écoulement.

(g)on compare ladite valeur maximale autorisée à la valeur calculée à l'étape (e) et, si ladite valeur maximale autorisée est inférieure à ladite valeur calculée, on utilise ladite valeur maximale autorisée à la place de ladite valeur calculée.

**9.** Procédé de production selon l'une des revendications 6 à 8, dans lequel le premier organe est une première bouteille (R1, ..., R0) contenant un adsorbant, dans lequel le deuxième organe est une deuxième bouteille (R1, ..., R0) contenant un adsorbant, ledit procédé de production comprenant une étape d'équilibrage au cours de laquelle un gaz s'écoule dans la conduite de raccordement depuis la première vers la deuxième bouteille jusqu'à ce qu'une valeur de différence de pression entre la pression dans la deuxième bouteille et la pression dans la première bouteille atteigne une valeur donnée, et au cours de laquelle on met en oeuvre au moins les étapes (b) à (e) avec comme paramètre physique de l'écoulement une différence de pression entre la première et la deuxième bouteille.

**10.** Procédé de production selon l'une des revendications 6 à 8, dans lequel le premier organe est une première bouteille (R1, ..., R0) contenant un adsorbant, dans lequel le deuxième organe est une deuxième bouteille (R1, ..., R0) contenant un adsorbant, ledit procédé de production comprenant une étape d'élution au cours de laquelle un gaz s'écoule dans la conduite de raccordement de la première à la deuxième bouteille pour rincer ladite deuxième bouteille, et au cours de laquelle on met en oeuvre au moins les étapes (b) à (e) avec comme paramètre physique de l'écoulement une différence de pression entre la première et la deuxième bouteille.

**11.** Procédé de production selon l'une des revendications 6 à 8, dans lequel ladite installation comprend une conduite de production (2) délivrant un gaz produit par l'installation, et une conduite d'alimentation (1) en gaz alimentant ladite installation, dans lequel le deuxième organe est une deuxième bouteille (R1,..., R0) contenant un adsorbant, ledit procédé de production comprenant une étape de repressurisation finale au cours de laquelle un gaz s'écoule dans une conduite de raccordement vers la deuxième bouteille pour augmenter une valeur de pression dans la deuxième bouteille, et au cours de laquelle on met en oeuvre au moins les étapes (b) à (e) avec comme paramètre physique de l'écoulement une différence de pression entre une première bouteille reliée à l'une des conduites de production et d'alimentation et la deuxième bouteille.

**12.** procédé de production selon l'une des revendications 6 à 8, dans lequel le premier organe est une première bouteille contenant un adsorbant, dans lequel le deuxième organe est une conduite d'évacuation de gaz résiduaire (5), ledit procédé de production comprenant une étape de dépressurisation au cours de laquelle un gaz s'écoule dans la conduite de raccordement entre la première bouteille et la conduite d'évacuation jusqu'à atteindre un niveau de pression basse pour la première bouteille, et au cours de laquelle on met en oeuvre au moins les étapes (b) à (e) avec comme paramètre physique de l'écoulement une différence de pression entre la première bouteille et la conduite d'évacuation de gaz résiduaire.

13. procédé de production selon la revendication 6 ou la revendication 7,
dans lequel ladite installation comprend en outre une conduite d'alimentation (1) en gaz alimentant ladite installation selon un débit d'alimentation,
une conduite de production (2) de l'installation délivrant un gaz produit selon un débit de production,
et une bouteille d'équilibrage, un gaz s'écoulant de la bouteille d'équilibrage à une deuxième bouteille pendant une étape d'équilibrage jusqu'à ce qu'une valeur de différence de pression entre la pression dans la deuxième bouteille et la pression dans la bouteille d'équilibrage atteigne une valeur donnée,
dans lequel le premier organe est une première bouteille reliée à une des conduites d'alimentation et de production,
dans lequel le deuxième organe est ladite deuxième bouteille (R1, ..., R0),
ledit procédé de production comprenant une étape de repressurisation continue au cours de laquelle un gaz s'écoule dans la conduite de raccordement entre ladite conduite et la deuxième bouteille jusqu'à obtenir une pression de fonctionnement dans la deuxième bouteille, et au cours de laquelle on met en oeuvre au moins les étapes (b) à (e) avec comme paramètre physique de l'écoulement une différence entre le débit de production et le débit d'alimentation.

14. Procédé de production selon l'une quelconque des revendications 6 à 13 dans lequel, au cours d'au moins une étape de procédé de production, on ne met en oeuvre au moins l'étape (e) qu'après un délai transitoire en début de l'étape de procédé de production, ledit délai transitoire étant d'une durée suffisante pour que le paramètre physique de l'écoulement prenne une valeur représentative.

15. Programme comprenant des moyens de code de programme adaptés pour mettre en oeuvre le procédé selon l'une des revendications 1 à 5 quand ledit programme est exécuté sur une machine programmable.

**Claims**

1. Method for adjusting a control unit of an installation for treating gases by adsorption,
said installation being suitable for implementing a method for producing gas during which a feed gas laden with impurities is supplied to the installation, for producing at least one gas issuing from the purification of the feed gas,
said production method comprising a plurality of steps, during which a gas is subjected to a flow in said installation,
said flow having a number of characteristic flow parameters,
said installation comprising a plurality of members:

- a feed line (1) conveying a feed gas to be purified by adsorption,
- a production line (2) conveying a purified gas,
- a removal line (5) conveying an offgas, containing the impurities of the feed gas,
- a plurality of cylinders ($R_1$, ..., $R_0$) containing at least one adsorbent material,

said installation further comprising:

- a plurality of connecting lines (3, 4, 6, 7), each connecting two of said members together,
- a valve on each of said connecting lines, each valve being suitable for being selectively closed to prevent a flow of gas in the connecting line, or opened according to a variable opening parameter, to allow a flow of gas in the connecting line,

a system being defined by two members connected together by a connecting line equipped with a valve,
said installation having a number of characteristic installation parameters, and

- said control unit (8), suitable for ordering the opening of the valve according to an opening parameter for each system, for each step,
- for each system, a detection device suitable for measuring a measured value of a physical parameter of the gas flow for the system,

said control unit (8) being suitable for calculating, for each system, a forecasting parameter for opening the valve, a setpoint for said physical flow parameter, an error between a function of said setpoint and the function of said measured value,

said control unit being suitable for ordering the opening of the valve according to said opening parameter for each system, for each step, on the basis of at least said forecasting parameter for opening the valve, and at least one correction parameter applied to said error,

said adjustment method comprising a step (a) in which said correction parameter is adjusted according to said characteristic installation and flow parameters.

2. Adjustment method according to Claim 1, in which the correction parameter is a proportional correction parameter applied to an error between the function of the current setpoint and the function of the current measured value.

3. Adjustment method according to Claim 2, in which, during the implementation of the gas production method, the control unit is suitable for ordering the opening of the valve further according to a previous opening parameter for the valve, a previous value of the forecasting parameter, said proportional correction parameter applied to an error between the function of a previous setpoint for the physical flow parameter and the function of a previous measured value for the physical flow parameter, and a second comprehensive correction parameter applied to said error between the function of a current setpoint for the physical flow parameter and the function of a current measured value for the physical flow parameter,

during step (a) of the adjustment method, said second comprehensive correction parameter is adjusted according to said characteristic installation and flow parameters.

4. Adjustment method according to Claim 1, in which, during the implementation of the gas production method, the control unit is suitable for ordering the opening of the valve further according to a previous opening parameter for the valve, and a previous value of the forecasting parameter, and in which the correction parameter is a comprehensive correction parameter applied to the error between the function of the previous setpoint and the function of the previous measured value,

adjustment method in which, during step (a), said comprehensive correction parameter is adjusted according to the installation and flow parameters.

5. Adjustment method according to one of Claims 1 to 4, in which, during the implementation of a gas production method, the control unit is suitable for ordering the opening of the valve further according to a maximum permissible value for said opening parameter.

6. A method for producing gas by adsorption using an installation comprising a control unit adjusted by an adjustment method according to one of Claims 1 to 5, said gas production method comprising a plurality of distinct steps extending between a phase beginning and a phase ending, during each of which, for at least a system comprising a first and a second member, a connecting line connecting said first and second members together, a valve on said connecting line, a gas flowing between the first and second members, the following steps are implemented repeatedly:

(b) the setpoint is calculated for the physical flow parameter,
(c) using the detection device, said measured value of said physical flow parameter is measured,
(d) the forecasting parameter for opening the valve is calculated as a function of time, of the characteristic installation and flow parameters, and of said setpoint for the physical flow parameter, and
(e) the value of said opening parameter is calculated as a function of the correction parameter adjusted in step (a), applied to the error between the function of said measured value and the function of said setpoint for said physical flow parameter and of the forecasting opening parameter.

7. Production method according to Claim 6, in which an operating point of the system is measured at the beginning of a step, and in which, during step (e), said error is calculated by applying to said measured value and to said setpoint a nonlinear function of normalization to the operating point.

8. Production method according to either of Claims 6 and 7, in which the following steps are implemented repeatedly:

(f) a maximum permissible value is calculated for the opening parameter, as a function of time, of the characteristic installation and flow parameters, and of said measured value for the physical flow parameter,
(g) said maximum permissible value is compared with the value calculated in step (e) and, if said maximum permissible value is lower than said calculated value, said maximum permissible value is used instead of said calculated value.

9. Production method according to one of Claims 6 to 8, in which the first member is a first cylinder (R1, ..., R0) containing an adsorbent, in which the second member is a second cylinder (R1, ..., R0) containing an adsorbent, said production method comprising a balancing step during which a gas flows into the connecting line from the first to the second cylinder until a value of a pressure difference between the pressure in the second cylinder and the pressure in the first cylinder reaches a given value, and during which at least the steps (b) to (e) are implemented with, as the physical flow parameter, a pressure difference between the first and the second cylinder.

10. Production method according to one of Claims 6 to 8, in which the first member is a first cylinder (R1, ..., R0) containing an adsorbent, in which the second member is a second cylinder (R1, ..., R0) containing an adsorbent, said production method comprising an elution step during which a gas flows into the connecting line from the first to the second cylinder to rinse said second cylinder, and during which at least the steps (b) to (e) are implemented with, as physical flow parameter, a pressure difference between the first and the second cylinder.

11. Production method according to one of Claims 6 to 8, in which said installation comprises a production line (2) delivering a gas produced by the installation, and a feed line (1) conveying a gas supplied to said installation, in which the second member is a second cylinder (R1, ..., R0) containing an adsorbent, said production method comprising a final repressurization step during which a gas flows into a connecting line to the second cylinder to increase a pressure value in the second cylinder, and during which at least the steps (b) to (e) are implemented with, as physical flow parameter, a pressure difference between a first cylinder connected to one of the production and feed lines and the second cylinder.

12. Production method according to one of Claims 6 to 8, in which the first member is a first cylinder containing an adsorbent, in which the second member is an offgas removal line (5), said production method comprising a depressurization step during which a gas flows into the connecting line between the first cylinder and the removal line until a low pressure level is reached for the first cylinder, and during which at least the steps (b) to (e) are implemented with, as physical flow parameter, a pressure difference between the first cylinder and the offgas removal line.

13. Production method according to either of Claims 6 and 7,
in which said installation further comprises a feed line (1) conveying a gas supplied to said installation at a feed rate,
a production line (2) from the installation delivering a gas produced at a production rate,
and a balancing cylinder, a gas flowing from the balancing cylinder to a second cylinder during a balancing step until a pressure difference between the pressure in the second cylinder and the pressure in the balancing cylinder reaches a given value,
in which the first member is a first cylinder connected to one of the feed and production lines,
in which the second member is said second cylinder (R1, ..., R0),
said production method comprising a continuous repressurization step during which a gas flows into the connecting line between said line and the second cylinder until an operating pressure in the second cylinder is obtained, and during which at least the steps (b) to (e) are implemented with, as physical flow parameter, a difference between the production rate and the feed rate.

14. Production method according to any one of Claims 6 to 13 in which, during at least one step of the production method, at least the step (e) is only implemented after a time lag at the start of the step of the production method, said time lag having a sufficient duration so that the physical flow parameter reaches a representative value.

15. Program comprising program encoding means suitable for implementing the method according to one of Claims 1 to 5 when said program is run on a programmable machine.

**Patentansprüche**

1. Verfahren zur Regelung einer Steuereinheit einer Anlage zur Adsorptionsbehandlung von Gas,
wobei die Anlage dazu bestimmt ist, ein Verfahren zur Gasproduktion durchzuführen, während dem ein verunreinigtes Speisegas an die Anlage geliefert wird, um mindestens ein Gas zu produzieren, das von der Reinigung des Speisegases stammt, wobei das Produktionsverfahren mehrere Schritte enthält, während denen ein Gas einer Strömung in der Anlage unterworfen wird, wobei die Strömung eine bestimmte Anzahl von charakteristischen Strömungsparametern aufweist,

wobei die Anlage mehrere Bauteile enthält:

- eine Leitung (1) zum Speisen mit einem Speisegas, das durch Adsorption gereinigt werden soll,
- eine Leitung (2) zur Produktion eines gereinigten Gases,
- eine Leitung (5) zum Abführen eines Restgases, das Verunreinigungen des Speisegases enthält,
- mehrere Flaschen (R1, ..., R0), die mindestens ein Adsorptionsmaterial enthalten,

wobei die Anlage weiter enthält:

- mehrere Anschlussleitungen (3, 4, 6, 7), die je zwei der Bauteile miteinander verbinden,
- ein Ventil auf jeder Anschlussleitung, wobei jedes Ventil geeignet ist, um selektiv geschlossen zu werden, um einen Gasfluss in der Anschlussleitung zu verhindern, oder gemäß einem variablen Öffnungsparameter geöffnet zu werden, um einen Gasfluss in der Anschlussleitung zu erlauben,

wobei ein System von zwei miteinander durch eine mit einem Ventil versehene Anschlussleitung verbundenen Bauteilen definiert wird,
wobei die Anlage eine bestimmte Anzahl von charakteristischen Anlageparametern aufweist, und

- die Steuereinheit (8), geeignet, um die Öffnung des Ventils gemäß einem Öffnungsparameter für jedes System, für jeden Schritt zu steuern,
- für jedes System eine Erfassungsvorrichtung, die geeignet ist, um einen gemessenen Wert eines physikalischen Parameters der Gasströmung für das System zu messen,

wobei die Steuereinheit (8) geeignet ist, um für jedes System einen Öffnungs-Vorhersageparameter des Ventils, einen Sollwert für den physikalischen Parameter der Strömung, einen Fehler zwischen einer Funktion des Sollwerts und der Funktion des gemessenen Werts zu berechnen,
wobei die Steuereinheit geeignet ist, um die Öffnung des Ventils gemäß dem Öffnungsparameter für jedes System, für jeden Schritt, auf der Basis mindestens des Öffnungs-Vorhersageparameters des Ventils und mindestens eines an den Fehler angewendeten Korrekturparameters zu steuern,
wobei das Regelungsverfahren einen Schritt (a) enthält, während dem der Korrekturparameter in Abhängigkeit von den charakteristischen Anlage- und Strömungsparametern geregelt wird.

**2.** Regelungsverfahren nach Anspruch 1, bei dem der Korrekturparameter ein proportionaler Korrekturparameter ist, der an einen Fehler zwischen der Funktion des aktuellen Sollwerts und der Funktion des aktuellen gemessenen Werts angewendet wird.

**3.** Regelungsverfahren nach Anspruch 2, bei dem bei der Durchführung des Gasproduktionsverfahrens die Steuereinheit geeignet ist, um die Öffnung des Ventils außerdem gemäß einem vorherigen Öffnungsparameter für das Ventil, einem vorherigen Wert des Vorhersageparameters, dem proportionalen Korrekturparameter, angewendet an einen Fehler zwischen der Funktion eines vorherigen Sollwerts für den physikalischen Parameter der Strömung und der Funktion eines vorherigen gemessenen Werts für den physikalischen Parameter der Strömung, und einem zweiten integralen Korrekturparameter zu steuern, der an den Fehler zwischen der Funktion eines aktuellen Sollwerts für den physikalischen Parameter der Strömung und der Funktion eines aktuellen gemessenen Werts für den physikalischen Parameter der Strömung angewendet wird,
während des Schritts (a) des Regelungsverfahrens der zweite integrale Korrekturparameter in Abhängigkeit von den charakteristischen Anlage- und Strömungsparametern geregelt wird.

**4.** Regelungsverfahren nach Anspruch 1, bei dem bei der Durchführung des Gasproduktionsverfahrens die Steuereinheit geeignet ist, um die Öffnung des Ventils außerdem gemäß einem vorherigen Öffnungsparameter für das Ventil und einem vorherigen Wert des Vorhersageparameters zu steuern, und bei dem der Korrekturparameter ein integraler Korrekturparameter ist, der an den Fehler zwischen der Funktion des vorherigen Sollwerts und der Funktion des vorherigen gemessenen Werts angewendet wird,
Regelungsverfahren, bei dem während des Schritts (a) der integrale Korrekturparameter in Abhängigkeit von den Anlage- und Strömungsparametern geregelt wird.

**5.** Regelungsverfahren nach einem der Ansprüche 1 bis 4, bei dem bei der Durchführung des Gasproduktionsverfahrens die Steuereinheit geeignet ist, um die Öffnung des Ventils außerdem gemäß einem erlaubten maximalen Wert für den Öffnungsparameter zu steuern.

**6.** Gasproduktionsverfahren durch Adsorption mittels einer Anlage, die eine Steuereinheit enthält, welche durch ein Regelungsverfahren nach einem der Ansprüche 1 bis 5 geregelt wird, wobei das Gasproduktionsverfahren mehrere unterschiedliche Schritte enthält, die sich zwischen einem Phasenanfang und einem Phasenende erstrecken, während jedem von denen für mindestens ein ein erstes und ein zweites Bauteil enthaltendes System, eine Anschlussleitung, die das erste und das zweite Bauteil miteinander verbindet, ein Ventil auf der Anschlussleitung, ein zwischen dem ersten und dem zweiten Bauteil strömendes Gas die folgenden Schritte wiederholt angewendet werden:

(b) der Sollwert für den physikalischen Parameter der Strömung wird berechnet,
(c) durch die Erfassungsvorrichtung wird der gemessene Wert des physikalischen Parameters der Strömung gemessen,
(d) der Öffnungs-Vorhersageparameter des Ventils wird in Abhängigkeit von der Zeit, den charakteristischen Anlage- und Strömungsparametern und dem Sollwert für den physikalischen Parameter der Strömung berechnet, und
(e) der Wert des Öffnungsparameters wird in Abhängigkeit von dem im Schritt (a) geregelten Korrekturparameter, der an den Fehler zwischen der Funktion des gemessenen Werts und der Funktion des Sollwerts für den physikalischen Parameter der Strömung angewendet wird, und dem Öffnungs-Vorhersageparameter berechnet.

**7.** Produktionsverfahren nach Anspruch 6, bei dem ein Betriebspunkt des Systems zu Beginn des Schritts gemessen wird, und bei dem während des Schritts (e) der Fehler berechnet wird, indem an den gemessenen Wert und an den Sollwert eine nicht-lineare Normalisierungsfunktion am Betriebspunkt angewendet wird.

**8.** Produktionsverfahren nach Anspruch 6 oder Anspruch 7, bei dem außerdem wiederholt die folgenden Schritte durchgeführt werden:

(f) es wird ein erlaubter maximaler Wert für den Öffnungsparameter in Abhängigkeit von der Zeit, den charakteristischen Anlage- und Strömungsparametern und dem gemessenen Wert für den physikalischen Parameter der Strömung berechnet,
(g) der erlaubte maximale Wert wird mit dem im Schritt
(e) berechneten Wert verglichen, und wenn der erlaubte maximale Wert geringer als der berechnete Wert ist, wird der erlaubte maximale Wert anstelle des berechneten Werts verwendet.

**9.** Produktionsverfahren nach einem der Ansprüche 6 bis 8, bei dem das erste Bauteil eine erste ein Adsorptionsmittel enthaltende Flasche (R1, ..., R0) ist, bei dem das zweite Bauteil eine zweite ein Adsorptionsmittel enthaltende Flasche (R1, ..., R0) ist, wobei das Produktionsverfahren einen Ausgleichsschritt enthält, während dem ein Gas in der Anschlussleitung von der ersten zur zweiten Flasche strömt, bis ein Druckunterschiedswert zwischen dem Druck in der zweiten Flasche und dem Druck in der ersten Flasche einen gegebenen Wert erreicht, und während dem mindestens die Schritte (b) bis (e) durchgeführt werden, mit als physikalischem Parameter der Strömung einem Druckunterschied zwischen der ersten und der zweiten Flasche.

**10.** Produktionsverfahren nach einem der Ansprüche 6 bis 8, bei dem das erste Bauteil eine erste ein Adsorptionsmittel enthaltende Flasche (R1, ..., R0) ist, bei dem das zweite Bauteil eine zweite ein Adsorptionsmittel enthaltende Flasche (R1, ..., R0) ist, wobei das Produktionsverfahren einen Elutionsschritt enthält, während dem ein Gas in der Anschlussleitung von der ersten zur zweiten Flasche strömt, um die zweite Flasche zu spülen, und während dem mindestens die Schritte (b) bis (e) durchgeführt werden, mit als physikalischem Parameter der Strömung einem Druckunterschied zwischen der ersten und der zweiten Flasche.

**11.** Produktionsverfahren nach einem der Ansprüche 6 bis 8, bei dem die Anlage eine Produktionsleitung (2), die ein von der Anlage erzeugtes Gas liefert, und eine Gasspeiseleitung (1) enthält, die die Anlage mit Gas speist, bei dem das zweite Bauteil eine zweite ein Adsorptionsmittel enthaltende Flasche (R1, ..., R0) ist, wobei das Produktionsverfahren einen Schritt des End-Druckwiederaufbaus enthält, während dem ein Gas in der Anschlussleitung zur zweiten Flasche strömt, um einen Druckwert in der zweiten Flasche zu erhöhen, und während dem mindestens die Schritte (b) bis (e) durchgeführt werden, mit als physikalischem Parameter der Strömung einem Druckunterschied zwischen einer ersten, mit einer der Produktions- und Speiseleitungen verbundenen Flasche und der zweiten Flasche.

**12.** Produktionsverfahren nach einem der Ansprüche 6 bis 8, bei dem das erste Bauteil eine erste ein Adsorptionsmittel enthaltende Flasche ist, bei dem das zweite Bauteil eine Restgas-Abfuhrleitung (5) ist, wobei das Produktionsverfahren einen Schritt der Druckminderung enthält, während dem ein Gas in der Anschlussleitung zwischen der ersten Flasche und der Abfuhrleitung strömt, bis ein Niederdruckpegel für die erste Flasche erreicht wird, und während dem mindestens die Schritte (b) bis (e) durchgeführt werden, mit als physikalischem Parameter der Strömung einem Druckunterschied zwischen der ersten Flasche und der Restgas-Abfuhrleitung.

13. Produktionsverfahren nach Anspruch 6 oder Anspruch 7, bei dem die Anlage außerdem enthält
   eine Gasspeiseleitung (1), die die Anlage gemäß einem Speisedurchsatz speist,
   eine Produktionsleitung (2) der Anlage, die ein produziertes Gas gemäß einem Produktionsdurchsatz liefert,
   und eine Ausgleichsflasche, wobei ein Gas von der Ausgleichsflasche zu einer zweiten Flasche während eines Ausgleichsschritts strömt, bis ein Druckunterschiedswert zwischen dem Druck in der zweiten Flasche und dem Druck in der Ausgleichsflasche einen gegebenen Wert erreicht,
   bei dem das erste Bauteil eine erste Flasche ist, die mit einer der Speise- und Produktionsleitungen verbunden ist, wobei das zweite Bauteil die zweite Flasche (R1, ..., R0) ist,
   wobei das Produktionsverfahren einen Schritt des durchgehenden Druckwiederaufbaus enthält, während dem ein Gas in der Anschlussleitung zwischen der Leitung und der zweiten Flasche strömt, bis ein Betriebsdruck in der zweiten Flasche erhalten wird, und während dem mindestens die Schritte (b) bis (e) durchgeführt werden, mit als physikalischem Parameter der Strömung einem Unterschied zwischen dem Produktionsdurchsatz und dem Speisedurchsatz.

14. Produktionsverfahren nach einem der Ansprüche 6 bis 13, bei dem während mindestens eines Produktionsverfahrensschritts mindestens der Schritt (e) erst nach einer Übergangsfrist zu Beginn des Produktionsverfahrensschritts durchgeführt wird, wobei die Übergangsfrist eine ausreichende Dauer hat, damit der physikalische Parameter der Strömung einen repräsentativen Wert annimmt.

15. Programm, das Programmcode-Einrichtungen enthält, die geeignet sind, um das Verfahren nach einem der Ansprüche 1 bis 5 durchzuführen, wenn das Programm in einer programmierbaren Maschine ausgeführt wird.

FIG. 1

EP 1 954 377 B1

FIG. 2

FIG. 3V

FIG. 3IV

FIG. 3III

FIG. 3II

FIG. 3I

FIG. 3X

FIG. 3IX

FIG. 3VIII

FIG. 3VII

FIG. 3VI

FIG. 4

**FIG. 5a**

**FIG. 5b**

FIG. 6

FIG. 7

FIG. 8

FIG. 9

FIG. 10

FIG. 11

FIG. 12

**EP 1 954 377 B1**

## RÉFÉRENCES CITÉES DANS LA DESCRIPTION

**Documents brevets cités dans la description**

- EP 1336910 A